(19)

**Europäisches Patentamt**
**European Patent Office**
**Office européen des brevets**

(11)  **EP 2 508 566 B1**

(12) **EUROPEAN PATENT SPECIFICATION**

(45) Date of publication and mention
of the grant of the patent:
**28.05.2014  Bulletin 2014/22**

(51) Int Cl.:
**C08L 43/04** (2006.01)        **H01B 3/44** (2006.01)
**C08L 23/08** (2006.01)

(21) Application number: **11161485.5**

(22) Date of filing: **07.04.2011**

(54) **Silane crosslinkable polymer composition**

Silanvernetzbare Polymerzusammensetzung

Composition de polymère réticulable au silane

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.10.2012  Bulletin 2012/41**

(73) Proprietor: **Borealis AG**
**1220 Vienna (AT)**

(72) Inventors:
 • **Sultan, Bernt-Åke**
   **SE-444 42, Stenungsund (SE)**
 • **Dahlen, Kristian**
   **44460, Stora Höga (SE)**
 • **Gkourmpis, Thomas**
   **41132, Göteborg (SE)**
 • **Anker, Martin**
   **42543, Hisings Kärra (SE)**

 • **Nylander, Perry**
   **41261, Göteborg (SE)**
 • **Fagrell, Ola**
   **SE-444 45, Stenungsund (SE)**
 • **Lindbom, Lena**
   **44290, Kungälv (SE)**
 • **Verheule, Bart**
   **2627, Schelle (BE)**

(74) Representative: **Campbell, Neil Boyd**
**Dehns**
**St Bride's House**
**10 Salisbury Square**
**London**
**EC4Y 8JD (GB)**

(56) References cited:
**EP-A1- 1 923 404     EP-A2- 0 193 317**

EP 2 508 566 B1

**EP 2 508 566 B1**

**Description**

The present invention relates to a polymer composition comprising a silane crosslinkable polyolefin with hydrolysable silane groups, to a use of the polymer composition for producing an article, preferably a layer of a cable, to a process for producing an article, preferably a cable comprising a conductor surrounded by at least one layer comprising said polymer composition, as well as to a crosslinkable and crosslinked cable comprising a conductor surrounded by at least one layer comprising said polymer composition.

In wire and cable (W&C) applications a typical cable comprises a conductor surrounded by one or more layers of polymeric materials. The cables are commonly produced by extruding the layers on a conductor. One or more of said layers are often crosslinked to improve i.a. deformation resistance at elevated temperatures, as well as mechanical strength and/or chemical resistance, of the layer(s) of the cable.

Crosslinking of the polymers can be effected e.g. by free radical reaction using irradiation or using a crosslinking agent which is a free radical generating agent; or via hydrolysable silane groups present in the polymer using a condensation catalyst in the presence of water.

Power cable is defined to be a cable transferring energy operating at any voltage level. The voltage applied to the power cable can be alternating (AC), direct (DC) or transient (impulse). Moreover, power cables are typically indicated according to their level of operating voltage, e.g. a low voltage (LV), a medium voltage (MV), a high voltage (HV) or an extra high voltage (EHV) power cable, which terms are well known. LV power cable typically operates at voltages of below 3 kV. MV and HV power cables operate at higher voltage levels and in different applications than LV cables. A typical MV power cable, usually operates at voltages from 3 to 36 kV, and a typical HV power cable at voltages higher than 36 kV. EHV power cable operates at voltages which are even higher than typically used for HV power cable applications. LV power cable and in some embodiment medium voltage (MV) power cables usually comprise an electric conductor which is coated with an insulation layer. Typically MV and HV power cables comprise a conductor surrounded at least by an inner semiconductive layer, an insulation layer and an outer semiconductive layer, in that order.

Silane cured materials are used today primarily as insulation layer in low voltage cables and as insulation and semiconductive layer in medium and to some extent also for high voltage cables. Other suitable application areas are automotive and appliance wire insulation, communication cable insulation and as sheathing compounds for communication and power cables. The material is also suitable for pipes, injection moulded articles and films.

In case the polymer composition is crosslinkable via hydrolysable silane groups, then the hydrolysable silane groups may be introduced into the polymer by copolymerisation of a monomer, e.g. an olefin, together with a silane group containing comonomer or by grafting silane groups containing compound to a polymer. Grafting is a chemical modification of the polymer by addition of silane groups containing compound usually in a radical reaction. Such silane groups containing comonomers and compounds are well known in the field and e.g. commercially available. The hydrolysable silane groups are typically then crosslinked by hydrolysis and subsequent condensation in the presence of a silanol condensation catalyst and $H_2O$ in a manner known in the art. Silane crosslinking techniques are known and described e.g. in US 4,413,066, US 4.297.310, US 4,351,876, US 4,397,981, US 4,446,283 and US 4,456,704.

The storage stability is often a problem with hydrolysable silane groups containing polymers. Some properties that are relevant e.g. for cable layers materials can worsen during ageing, which is naturally not desirable.

EP193317 of Borealis discloses a silane crosslinkable polymer composition comprising copolymers of ethylene with 0.1-5 wt% of hydrolysable silane comonomer (in examples 5.5-0.08 wt%) and a silane compound having a hydrolysable silane group for preventing condensation reaction in the extruder and consequent surface unevenness. MFR of the polymers are not specified.

EP1528574 of Borealis discloses polyolefin with polar groups for LV power cable applications with improved adhesion and mechanical properties and easy processability. The polymers can be peroxide or silane crosslinkable, both exemplified. In the experimental part the hydrolysable silane groups containing polymers have an $MFR_2$ between 0.8-4.5 g/10 min and silane content between 0.23-0.43 mol%. The presence or absence of a scorch retarder has not been specified.

EP1824926 of Borealis discloses a polymer composition comprising a silane crosslinkable polyethylene with hydrolysable silane compounds (silane content of 0.1-10 wt%) and having a specific branching parameter (g') value. The polymer composition has an advantage that in the W&C applications the need of preheating the conductor or a tube on the die can be minimised or avoided. The polymers used in the examples of the EP '926 have a $MFR_2$ between 0.9-2.0 g/10 min and a silane content of 1.3 or 1.8 wt%.

WO2009059670 of Dow is focused on a tin based catalyst for crosslinking hydrolysable silane groups containing polymers. The silane groups containing polymers specified in the examples have an $MFR_2$ of 0.9 and 7 g/10 min and a silane content of 1.3, and, respectively, of 1.8 wt%.

The object of the present invention is to provide a further silane crosslinkable polymer composition with highly advantageous storage stability.

**Figures**

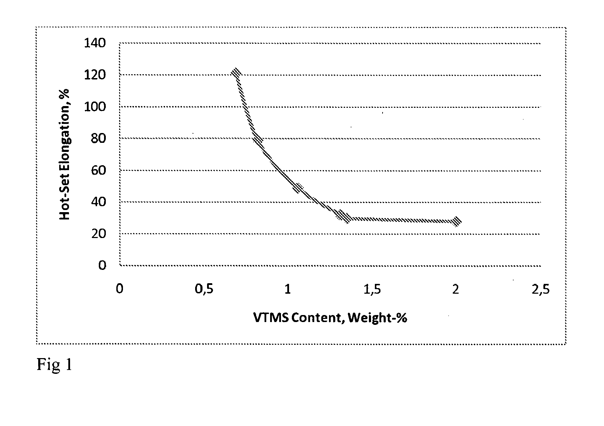

Fig 1 shows the final Hot set elongation vs VTMS content given in wt%.

**Description of the invention**

Accordingly, the present invention provides a polymer composition which comprises a polyolefin (a) bearing hydrolysable silane group(s) containing units, wherein

- the amount of the hydrolysable silane group(s) containing units is from 0.010 to 0.081 mol/kg polyolefin (a), when measured according to "The amount of hydrolysable silane group(s)" as described below under "Determination methods", and wherein
- the polymer composition has a hot set elongation exceeding 30%, when measured according to "Hot set elongation test" using a crosslinked cable sample as described under "Determination methods" after crosslinking the sample in water at 90°C for 20 hours.

The polymer composition of the invention as defined above or below is referred herein also shortly as "polymer composition". As to the components of the polymer composition, the polyolefin (a) bearing hydrolysable silane group(s) containing units is referred herein interchangeably also as "hydrolysable silane group(s) bearing polyolefin (a)", "silane group(s) bearing polyolefin (a)" or shortly as "polyolefin (a)". At least the polyolefin (a) of the polymer composition is crosslinkable.

The 0.010 to 0.081 mol/kg polyolefin (a) corresponds to 0.2 to 1.2 wt% of vinyl trimethoxy silane derived units based on the total amount of the polyolefin (a).

The reduction of the amount of the hydrolysable silane group(s) in the polyolefin (a) of the polymer composition provides an unexpected improvement on the storage stability in terms of mechanical properties of the polyolefin (a), such as less impaired elongation at break property after ageing (shown in the experimental part by retained ultimate elongation % (RUE) after ageing at 135°C as defined in IEC60502-1, see below "Hot set elongation test" under "Determination methods"). Surprisingly, the RUE levels are not dependent of the crosslinking degree, when the polyolefin (a) has the claimed final hot set elongation level as a result of the claimed content of silane group(s) containing unit(s), and, moreover, a RUE value below 25% is reached for all crosslinking degrees. This is unexpected in view of the prior art. Furthermore, the invention is very desirable due to possibility to reduce the number of hydrolysable silane group(s) containing units.

In a preferred embodiment of the invention, the polyolefin (a) of polymer composition has hydrolysable silane group(s) containing units in an amount of from 0.020 to 0.077 mol/kg polyolefin (a), preferably from 0.027 to 0.074 mol/kg polyolefin (a), preferably from 0.033 to 0.073 mol/kg polyolefin (a), preferably from 0.041 to 0.072 mol/kg polyolefin (a), from 0.044 to 0.072 mol/kg polyolefin (a). However, depending on end applications, even as low amounts of the hydrolysable silane group(s) containing units present in the polyolefin (a) as from 0.041 to 0.071 mol/kg polyolefin (a), preferably from 0.041 to 0.070 mol/kg polyolefin (a), preferably from 0.044 to 0.068 mol/kg polyolefin (a) may be desired and would then be preferable.

The polymer composition has preferably a hot set elongation of less than 180%, more preferably of 150% or less, more preferably of 130% or less, more preferably of less than 100%, when measured according to "Hot set elongation test" using a crosslinked cable sample as described under "Determination methods" after crosslinking the sample in water at 90°C for 20 hours.

In one preferable embodiment of the invention, the polyolefin (a) bearing hydrolysable silane group(s) containing units has an melt flow rate, $MFR_2$, of from 0.10 to 10.0 g/10 min, preferably from 0.30 to 5.0 g/10 min, preferably from 0.30 to 2.0 g/10 min, preferably from 0.30 to 1.50 g/10 min, preferably from 0.30 to 1.30 g/10 min, preferably from 0.30 to 1.20 g/10 min, preferably from 0.35 to 1.10 g/10 min, more preferably from 0.35 to 1.05 g/10 min" more preferably from 0.40 to 1.05 g/10 min, more preferably from 0.45 to 1.05 g/10 min, when measured according to ISO 1133 at 190 °C and at a load of 2.16 kg. In this invention, unexpectedly, also the MFR of the polymer composition can be reduced, while still maintaining very good processability properties. Moreover, the polyolefin (a) with reduced MFR can even result in an improved crosslinking behaviour of the silane crosslinkable polymer composition of the invention in the presence of a silanol condensation catalyst. For instance the crosslinking speed, expressed as said hot set elongation, of the polymer composition of the invention can even be increased. In this embodiment also the crosslinking degree of the composition is very advantageous e.g. for W&C applications.

Moreover, in further preferable embodiment of the invention, the polymer composition further comprises a scorch retarding compound (herein referred also shortly as SR compound). Unexpectedly, when the polyolefin (a) of the invention is combined with a SR compound, then the advantageous crosslinking speed can be maintained in essentially the same level as without using the SR compound. More preferably the polymer composition comprises a SR and the polyolefin (a) has the $MFR_2$ value as defined above. Accordingly, the polyolefin (a) can be combined with SR compound without sacrificing the crosslinking speed and without sacrificing the final hot set value. As a result the crosslinking conditions can be milder and/or crosslinking time reduced.

The optional and preferable SR compound component of the polymer composition is described later below (under "SR compound") in more details including the preferable subgroups and embodiments thereof.

Preferably, the polymer composition has an elongation at break of 250% or more, preferably of 300% or more, preferably of 330% or more, preferably of 350% or more, more preferably from 370 to 700%, more preferably from 380 to 700%, when measured from a crosslinked cable sample after crosslinking the sample at ambient conditions for 21 days according to "Determination of mechanical properties prior and after thermo oxidative ageing" as described below under "Determination methods". In the above definition the elongation at break is measured without effecting the thermo oxidative ageing of the cable sample.

A preferable silane group(s) containing unit present in the polyolefin (a) is a silane compound of formula (I) as defined below under "Polyolefin (a)". Even more preferably the hydrolysable silane group(s) containing unit present in the polyolefin (a) is a silane compound of formula (II) as defined below under "Polyolefin (a)" including the preferable subgroups and embodiments thereof.

The polymer composition of the invention is highly useful for producing an article, preferably at least one layer of a cable. Moreover, the polyolefin (a) of the polymer composition in the formed layer is most preferably crosslinked before the end use of the cable. The crosslinking is carried out in the presence of silanol condensation catalyst and water. Accordingly, the silane group(s) containing units present in the polyolefin (a) are hydrolysed under the influence of water in the presence of the silanol condensation catalyst resulting in the splitting off of alcohol and the formation of silanol groups, which are then crosslinked in a subsequent condensation reaction wherein water is split off and Si-O-Si links are formed between other hydrolysed silane groups present in said polyolefin (a). The crosslinked polymer composition has a typical network, i.a. interpolymer crosslinks (bridges), as well known in the field. The silanol condensation catalyst useful for the present invention are either well known and commercially available, or can be produced according to or analogously to a literature described in the field.

Due to advantageous mechanical properties the polymer composition is highly useful for LV, MV or HV cables comprising a thick insulation layer of the polymer composition. Moreover, the first preferred embodiment of the invention enables crosslinking of such layers, if desired, in ambient temperatures and/or at shorter time. As a result the cable production can be effected with simplified and cost-saving manner. The invention is particularly preferable e.g. for a LV power cable when the thickness of the insulation layer exceeds 0.7 mm, e.g. exceeds up to 3 mm. However, also in case of thicker insulation layers, such as in typical MV or HV power cable applications, the polymer composition of the invention accelerates the crosslinking of the MV or HV power cable even when effected in sauna or a water bath. The invention is also advantageous for thinner insulations e.g. for appliance and automotive wires in which the insulation thickness commonly is below 0.7 mm. These wires are rapidly cured at ambient conditions. Finally, the polymer composition can be feasibly extruded to form a layer of a cable which is then crosslinked in shorter time and/or milder conditions to obtain a crosslinked cable with very good mechanical and surface properties. The properties mentioned above are measured using methods described under the "Determination methods".

Accordingly, it is preferred that the polymer composition further comprises a silanol condensation catalyst. In this context it means that the polymer composition may comprise the silanol condensation catalyst before it is used to form an article, preferably a cable layer or the silanol condensation catalyst compound may be introduced to the polymer composition after the article, preferably cable layer, formation, e.g. during the crosslinking step of the formed article, preferably formed cable.

The silanol condensation catalyst, is preferably selected from carboxylates of metals, such as tin, zinc, iron, lead and cobalt; from a titanium compound bearing a group hydrolysable to a Brönsted acid; from organic bases; from inorganic acids; and from organic acids; more preferably from carboxylates of metals, such as tin, zinc, iron, lead and cobalt, from titanium compound bearing a group hydrolysable to a Brönsted acid as defined above or from organic acids. The silanol condensation catalyst is more preferably selected from DBTL, DOTL, particularly DOTL; titanium compound bearing a group hydrolysable to a Brönsted acid as defined above; or an aromatic organic sulphonic acid, which is preferably an organic sulphonic acid which comprises the structural element: $Ar(SO_3H)_x$ (II)

wherein Ar is an aryl group which may be substituted or non-substituted, and if substituted, then preferably with at least one hydrocarbyl group up to 50 carbon atoms, and x is at least 1; or a precursor of the sulphonic acid of formula (II) including an acid anhydride thereof or a sulphonic acid of formula (II) that has been provided with a hydrolysable protective group(s), e.g. an acetyl group that is removable by hydrolysis.

Such organic sulphonic acids are described e.g. in EP736065, or alternatively, in EP1309631 and EP1309632.

The preferred silanol condensation catalyst is an aromatic sulphonic acid, more preferably the aromatic organic sulphonic acid of formula (II). Said preferred sulphonic acid of formula (II) as the silanol condensation catalyst may comprise the structural unit according to formula (II) one or several times, e.g. two or three times (as a repeating unit (II)). For example, two structural units according to formula (II) may be linked to each other via a bridging group such as an alkylene group.

More preferably, the organic aromatic sulphonic acid of formula (II) as the preferred silanol condensation catalyst has from 6 to 200 C-atoms, more preferably from 7 to 100 C-atoms.

More preferably, in the sulphonic acid of formula (II) as the preferred silanol condensation catalyst, x is 1, 2 or 3, and more preferably x is 1 or 2. More preferably, in the sulphonic acid of formula (II) as the preferred silanol condensation catalyst, Ar is a phenyl group, a naphthalene group or an aromatic group comprising three fused rings such as phenantrene and anthracene.

Non-limiting examples of the even more preferable sulphonic acid compounds of formula (II) are p-toluene sulphonic acid, 1-naphtalene sulfonic acid, 2-naphtalene sulfonic acid, acetyl p-toluene sulfonate, acetylmethane-sulfonate, dodecyl benzene sulphonic acid, octadecanoylmethanesulfonate and tetrapropyl benzene sulphonic acid; which each independently can be further substituted.

Even more preferred sulphonic acid of formula (II) is substituted, i.e. Ar is an aryl group which is substituted with at least one C1 to C30-hydrocarbyl group. In this more preferable subgroup of the sulphonic acid of formula (II), it is furthermore preferable that Ar is a phenyl group and x is at least one (i.e. phenyl is substituted with at least one -S(=O)$_2$OH), more preferably x is 1, 2 or 3; and more preferably x is 1 or 2 and Ar is phenyl which is substituted with at least one C3-20-hydrocarbyl group. Most preferred sulphonic acid (II) as the silanol condensation catalyst is tetrapropyl benzene sulphonic acid and dodecyl benzene sulphonic acid, more preferably dodecyl benzene sulphonic acid.

The amount of the silanol condensation catalyst is typically 0.00001 to 0.1 mol/kg polymer composition, preferably 0.0001 to 0.01 mol/kg polymer composition, more preferably 0.0005 to 0.005 mol/kg polymer composition. The choice of the catalyst and the feasible amount thereof depends on the end application and is well within the skills of a skilled person.

The polymer composition may contain further component(s), such as further polymer component(s), like miscible thermoplastic(s); additive(s), such as antioxidant(s), further stabilizer(s), e.g. water treeing retardant(s); lubricant(s), foaming agent(s) or colorant(s); filler(s), such a conductive filler.

The total amount of further polymer component(s), if present, is typically up to 60 wt%, preferably up 50 wt%, preferably up 40 wt %, more preferably from 0.5 to 30 wt% , preferably from 0.5 to 25 wt%, more preferably from 1.0 to 20 wt%, based on the total amount of the polymer composition.

The total amount of additive(s), if present, is generally from 0.01 to 10 wt%, preferably from 0.05 to 7 wt%, more preferably from 0.2 to 5 wt%, based on the total amount of the polymer composition.

As to additives, the polymer composition preferably comprises antioxidant(s), preferably neutral or acidic antioxidant(s) which preferably comprise a sterically hindered phenol group(s) or aliphatic sulphur group(s). Examples of suitable antioxidants for stabilisation of polyolefins containing hydrolysable silane groups which are crosslinked with a silanol condensation catalyst, in particular an acidic silanol condensation catalyst are disclosed in EP 1254923. Other preferred antioxidants are disclosed in WO 2005003199A1. Preferably, the antioxidant is present in the composition in an amount of from 0.01 to 3 wt%, more preferably 0.05 to 2 wt%, and most preferably 0.08 to 1.5 wt%, based on the total amount of the polymer composition.

As to further additives, the polymer composition may comprise a colorant which is then typically added to the composition in form of a color master batch. Such color master batches may be commercially available or may be prepared in a conventional manner by combining the colorant with a carrier medium. The amount of colorant master batch, if present, is preferably up to 5wt%, more preferably from 0.1 to 3 wt%, based on the total amount of the polymer composition.

Moreover, the polymer composition may comprise a filler(s), e.g. a conductive filler, such as a conductive carbon black, if used as semiconductive compositions; or a flame retardant filler(s), such as magnesium or aluminium hydroxide, if used as flame retardant composition; or a UV protecting filler(s), such as UV-carbon black or UV stabiliser, if used as UV-stabilised composition; or any combination(s) thereof. The amount of the filler in general depends on the nature of the filler and the desired end application, as evident for a skilled person. E.g. when the polymer composition comprises conductive filler, then the amount thereof is of up to 65 wt%, preferably from 5 to 50 wt%, based on the total amount of the polymer composition.

The amount of polyolefin (a) in the polymer composition of the invention is typically of at least 35 wt%, preferably of at least 40 wt%, preferably of at least 50 wt%, preferably of at least 75 wt%, more preferably of from 80 to 100 wt% and more preferably of from 85 to 100 wt%, based on the total amount of the polymer component(s) present in the polymer composition. The preferred polymer composition consists of polyolefin (a) as the only polymer components. The expression means that the polymer composition does not contain further polymer components, but the polyolefin (a) as the sole polymer component. However, it is to be understood herein that the polymer composition may comprise further component(s) other than the polyolefin (a) component, such as additive(s) which may optionally be added in a mixture with a carrier polymer in a so called master batch.

The amount of the optional and preferable SR compound of the polymer composition is typically at least 0.001 mol/kg polymer composition, preferably 0.001 to 0.2 mol/kg polymer composition, more preferably from 0.005 to 0.15 mol/kg polymer composition, more preferably from 0.01 to 0.1 mol/kg polymer composition, more preferably from 0.02 to 0.08 mol/kg polymer composition and most preferably form 0.02 to 0.05 mol/kg polymer composition.

The invention further provides an article, preferably a cable comprising a conductor surrounded by at least one layer comprising a polymer composition of the invention which comprises a polyolefin (a) bearing hydrolysable silane group(s) containing units, wherein

- the amount of the hydrolysable silane group(s) containing units is from 0.010 to 0.081 mol/kg polyolefin (a), when measured according to "The amount of hydrolysable silane group(s)" as described below under "Determination methods", and wherein
- the polymer composition has a hot set elongation exceeding 30%, when measured according to "Hot set elongation test" using a crosslinked cable sample as described under "Determination methods" after crosslinking the sample in water at 90°C for 20 hours; as defined above or below,

preferably a power cable selected from

- a cable (A) comprising a conductor surrounded by at least an insulating layer comprising a polymer composition of the invention which comprises a polyolefin (a) bearing hydrolysable silane group(s) containing units, wherein
- the amount of the hydrolysable silane group(s) containing units is from 0.010 to 0.081 mol/kg polyolefin (a), when measured according to "The amount of hydrolysable silane group(s)" as described below under "Determination methods", and wherein
- the polymer composition has a hot set elongation exceeding 30%, when measured according to "Hot set elongation test" using a crosslinked cable sample as described under "Determination methods" after crosslinking the sample in water at 90°C for 20 hours; as defined above or below, or
- a cable (B) comprising a conductor surrounded by an inner semiconductive layer, an insulating layer and an outer semiconductive layer, wherein at least one layer, preferably at least the insulation layer, comprises a polymer composition of the invention which comprises a polyolefin (a) bearing hydrolysable silane group(s) containing units, wherein
- the amount of the hydrolysable silane group(s) containing units is from 0.010 to 0.081 mol/kg polyolefin (a), when measured according to "The amount of hydrolysable silane group(s)" as described below under "Determination methods", and wherein
- the polymer composition has a hot set elongation exceeding 30%, when measured according to "Hot set elongation test" using a crosslinked cable sample as described under "Determination methods" after crosslinking the sample in water at 90°C for 20 hours; as defined above or below. The cable of the invention is described below in more details under "End use of the polymer composition".

The invention also provides a method for stabilising mechanical properties during storing of a composition which comprises a silane group(s) bearing polymer, wherein a polyolefin (a) which bears hydrolysable silane group(s) containing units in an amount of from 0.010 to 0.081 mol/kg polyolefin (a) including the preferred subgroups as defined above or below, (measured according to "The content of hydrolysable silane group(s)" as described under "Determination methods") is used as the silane group(s) bearing polymer. More preferable method is for retarding the decrease in elongation at break, when measured from a crosslinked cable sample after crosslinking the sample at ambient conditions for 21 days according to "Determination of mechanical properties prior and after thermo oxidative ageing" as described below under "Determination methods". The elongation at break is thus measured without effecting the thermo oxidative ageing.

The following preferable embodiments, properties and subgroups of the components, namely polyolefin (a) and the optional and preferable SR compound, are independently generalisable so that they can be used in any order or combination to further define the preferable embodiments of the polymer composition and the cable of the invention. Moreover, unless otherwise stated, it is evident that the given polyolefin (a) descriptions apply to the polyolefin prior optional crosslinking.

**Polyolefin (a) (= polyolefin (a) bearing hydrolysable silane group(s) containing units)**

Where herein it is referred to a "polyolefin", such as polyethylene, this is intended to mean both a homopolymer and copolymer of an olefin, such as a homopolymer and copolymer ethylene.

The hydrolysable silane groups may be introduced into the polyolefin of polyolefin (a) by copolymerisation of an olefin, e.g. ethylene, monomer with at least a silane group(s) containing comonomer or by grafting a silane group(s) containing compound to the polyolefin. Grafting is preferably effected by radical reaction, e.g. in the presence of a radical forming agent (such as peroxide). Both techniques are well known in the art.

Preferably, the polyolefin (a) bearing hydrolysable silane group(s) containing units is a copolymer of an olefin with a hydrolysable silane group(s) bearing comonomer and, optionally, with one or more other comonomer(s); or is a homopolymer or copolymer of an olefin wherein the silane group(s) containing units are introduced by grafting a to the polyolefin polymer.

As well known "comonomer" refers to copolymerisable comonomer units.

The silane group(s) containing comonomer for copolymerising silane groups or the silane group(s) containing compound for grafting silane groups to produce polyolefin (a) is preferably an unsaturated silane compound represented by the formula

$$R^1SiR^2_qY_{3-q} \qquad (I)$$

wherein

R$^1$ is an ethylenically unsaturated hydrocarbyl, hydrocarbyloxy or (meth)acryloxy hydrocarbyl group,
each R$^2$ is independently an aliphatic saturated hydrocarbyl group,
Y which may be the same or different, is a hydrolysable organic group and
q is 0, 1 or 2.

Special examples of the unsaturated silane compound are those wherein R$^1$ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and R$^2$, if present, is a methyl, ethyl, propyl, decyl or phenyl group.

Further suitable silane compounds are e.g. gamma-(meth)acryloxypropyl trimethoxysilane, gamma(meth)acryloxypropyl triethoxysilane, and vinyl triacetoxysilane, or combinations of two or more thereof.

A preferred unsaturated silane compound is represented by the formula

$$CH_2=CHSi(OA)_3 \qquad (II)$$

wherein each A is independently a hydrocarbyl group having 1-8 carbon atoms, preferably 1-4 carbon atoms.

Preferred compounds are vinyl trimethoxysilane, vinyl bismethoxyethoxysilane, vinyl triethoxysilane. As mentioned above, in a preferred embodiment of the invention the polyolefin (a) of polymer composition has hydrolysable silane group(s) containing units in an amount of from 0.020 to 0.077 mol/kg polyolefin (a), preferably from 0.027 to 0.074 mol/kg polyolefin (a), preferably from 0.033 to 0.073 mol/kg polyolefin (a), preferably from 0.041 to 0.072 mol/kg polyolefin (a), preferably from 0.041 to 0.072 mol/kg polyolefin (a), from 0.044 to 0.072 mol/kg polyolefin (a). However, depending on end applications, even as low amounts of the hydrolysable silane group(s) containing units present in the polyolefin (a) as from 0.041 to 0.071 mol/kg polyolefin (a), preferably from 0.041 to 0.070 mol/kg polyolefin (a), preferably from 0.044 to 0.068 mol/kg polyolefin (a) may be desired and would then be preferable.

A suitable polyolefin for the polyolefin (a) bearing hydrolysable silane group(s) containing units can be any polyolefin, such as any conventional polyolefin, which can be used for producing a cable layer of a cable of the present invention. For instance such suitable conventional polyolefins are as such well known and can be e.g. commercially available or can be prepared according to or analogously to known polymerization processes described in the chemical literature.

The polyolefin (a) for the polymer composition is preferably selected from a polypropylene (PP) or polyethylene (PE), preferably from a polyethylene, bearing hydrolysable silane group(s) containing units.

In case a polyolefin (a) is a copolymer of ethylene with at least one comonomer other than silane group(s) containing comonomer (referred herein also shortly as "other comonomer") and wherein the silane group(s) containing units are incorporated by grafting or copolymerizing with a silane group(s) containing comonomer, then suitable such other comonomer is selected from non-polar comonomer(s) or polar comonomer(s), or any mixtures thereof. Preferable other non-polar comonomers and polar comonomers are described below in relation to polyethylene produced in a high pressure process.

Preferable polyolefin (a) is a polyethylene produced in the presence of an olefin polymerisation catalyst or a polyethylene produced in a high pressure process and which bears hydrolysable silane group(s) containing units.

"Olefin polymerisation catalyst" means herein preferably a conventional coordination catalyst. It is preferably selected from a Ziegler-Natta catalyst, single site catalyst which term comprises a metallocene and a non-metallocene catalyst, or a chromium catalyst, or a Vanadium catalyst or any mixture thereof. The terms have a well known meaning.

Polyethylene polymerised in the presence of an olefin polymerisation catalyst in a low pressure process is also often called as "low pressure polyethylene" to distinguish it clearly from polyethylene produced in a high pressure process. Both expressions are well known in the polyolefin field. Low pressure polyethylene can be produced in polymerisation process operating i.a. in bulk, slurry, solution, or gas phase conditions or in any combinations thereof. The olefin polymerisation catalyst is typically a coordination catalyst.

More preferably, the polyolefin (a) is selected from a homopolymer or a copolymer of ethylene produced in the presence of a coordination catalyst or produced in a high pressure polymerisation process, which bears hydrolysable silane group(s) containing units.

In a first embodiment of the polyolefin (a) of the polymer composition of the invention, the polyolefin (a) is a low pressure polyethylene (PE) bearing the hydrolysable silane group(s) containing units. Such low pressure PE is preferably selected from a very low density ethylene copolymer (VLDPE), a linear low density ethylene copolymer (LLDPE), a medium density ethylene copolymer (MDPE) or a high density ethylene homopolymer or copolymer (HDPE), which bears hydrolysable silane group(s) containing units. These well known types are named according to their density area. The term VLDPE includes herein polyethylenes which are also known as plastomers and elastomers and covers the density range of from 850 to 909 kg/m$^3$. The LLDPE has a density of from 909 to 930 kg/m$^3$, preferably of from 910 to 929 kg/m$^3$, more preferably of from 915 to 929 kg/m$^3$. The MDPE has a density of from 930 to 945 kg/m$^3$, preferably 931 to 945 kg/m$^3$The HDPE has a density of more than 945 kg/m$^3$, preferably of more than 946 kg/m$^3$, preferably form 946 to 977 kg/m$^3$, more preferably form 946 to 965 kg/m$^3$. More preferably such low pressure copolymer of ethylene for the polyolefin (a) is copolymerized with at least one comonomer selected from C3-20 alpha olefin, more preferably from C4-12 alpha-olefin, more preferably from C4-8 alpha-olefin, e.g. with 1-butene, 1-hexene or 1-octene, or a mixture thereof. The amount of comonomer(s) present in a PE copolymer is from 0.1 to 15 mol%, typically 0.25 to 10 mol-%.

Moreover, in case the polyolefin (a) is a low pressure PE polymer bearing the hydrolysable silane group(s) containing units, then such PE can be unimodal or multimodal with respect to molecular weight distribution (MWD= Mw/Mn). Generally, a polymer comprising at least two polymer fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions.

"Polymer conditions" mean herein any of process parameters, feeds and catalyst system.

Unimodal low pressure PE can be produced by a single stage polymerisation in a single reactor in a well known and documented manner. The multimodal PE can be produced in one polymerisation reactor by altering the polymerisation conditions and optionally the catalyst, or, and preferably, in the multistage polymerisation process which is conducted in at least two cascaded polymerisation zones. Polymerisation zones may be connected in parallel, or preferably the polymerisation zones operate in cascaded mode. In the preferred multistage process a first polymerisation step is carried out in at least one slurry, e.g. loop, reactor and the second polymerisation step in one or more gas phase reactors. One preferable multistage process is described in EP517868.

A LLDPE or MDPE as defined above or below are preferable type of low pressure PE for polyolefin (a), more preferably a LLDPE copolymer as defined above or below. Such LLDPE can unimodal or multimodal.

The silane group(s) containing units can be incorporated to the low pressure polyethylene by grafting or by copolymerizing ethylene with a silane group(s) containing comonomer and optionally with other comonomer(s), which is preferably a non-polar comonomer. Preferable hydrolysable silane groups bearing low pressure PE as the polyolefin (a) is a homopolymer of ethylene, MDPE copolymer or a LLDPE copolymer, more preferably LLDPE copolymer, wherein the silane group(s) are incorporated by grafting a silane group(s) containing compound.

MFR$_2$ (2.16 kg, 190 °C) of the low pressure PE polymer bearing hydrolysable silane group(s) containing units as the polyolefin (a), is preferably 0.10 to 10.0 g/10 min, preferably from 0.30 to 5.0 g/10 min, preferably from 0.30 to 2.0 g/10 min, preferably from 0.30 to 1.50 g/10 min, preferably from 0.30 to 1.30 g/10 min, preferably from 0.30 to 1.20 g/10 min, preferably from 0.30 to 1.10 g/10 min, more preferably from 0.35 to 1.05 g/10 min, more preferably from 0.40 to 1.05 g/10 min, more preferably from 0.45 to 1.05 g/10 min, when measured according to ISO 1133 at 190 °C and at a load of 2.16 kg.

In a second embodiment of the polyolefin (a) of the invention, the polyolefin (a) is a polyethylene which is produced in a high pressure polymerisation (HP) process and bears hydrolysable silane group(s) containing units. In this embodiment the polyethylene is preferably produced in a high pressure polymerisation process in the presence of an initiator(s), more preferably is a low density polyethylene (LDPE) bearing hydrolysable silane group(s) containing units. It is to be noted that a polyethylene produced in a high pressure (HP) process is referred herein generally as LDPE and which term has a well known meaning in the polymer field. Although the term LDPE is an abbreviation for low density polyethylene, the term is understood not to limit the density range, but covers the LDPE-like HP polyethylenes with low, medium and higher densities. The term LDPE describes and distinguishes only the nature of HP polyethylene with typical features, such as different branching architecture, compared to the PE produced in the presence of an olefin polymerisation catalyst.

The polyolefin (a) according to the second embodiment is the preferred polyolefin (a) of the invention and is a polyethylene which is produced by a high pressure polymerisation (HP) and which bears hydrolysable silane group(s) containing units.

In this preferable second embodiment, such hydrolysable silane groups bearing LDPE polymer as polyolefin (a) may be a low density homopolymer of ethylene (referred herein as LDPE homopolymer) or a low density copolymer of ethylene (referred herein as LDPE copolymer) with at least one comonomer selected from the silane group(s) containing comonomer, which is preferably as defined above, or from the other comonomer as mentioned above, or any mixtures thereof. The one or more other comonomer(s) of LDPE copolymer are preferably selected from polar comonomer(s), non-polar comonomer(s) or from a mixture of polar comonomer(s) and non-polar comonomer(s), as defined above or below. Moreover, said LDPE homopolymer or LDPE copolymer as said polyolefin (a) may optionally be unsaturated.

As a polar comonomer, if present in the hydrolysable silane group(s) bearing LDPE copolymer as the polyolefin (a), such polar comonomer is preferably selected from a comonomer containing hydroxyl group(s), alkoxy group(s), carbonyl group(s), carboxyl group(s), ether group(s) or ester group(s), or a mixture thereof. Moreover, comonomer(s) containing carboxyl and/or ester group(s) are more preferable as said polar comonomer. Still more preferably, the polar comonomer(s), if present in the hydrolysable silane groups bearing LDPE copolymer as the polyolefin (a), is selected from the groups of acrylate(s), methacrylate(s) or acetate(s), or any mixtures thereof, more preferably the polar comonomer(s) is selected from the group of alkyl acrylates, alkyl methacrylates or vinyl acetate, or a mixture thereof, even more preferably from $C_1$- to $C_6$-alkyl acrylates, $C_1$- to $C_6$-alkyl methacrylates or vinyl acetate. Still more preferably, if polar comonomer(s) are present, then the hydrolysable silane groups bearing LDPE copolymer as the polyolefin (a) is a copolymer of ethylene with $C_1$- to $C_4$-alkyl acrylate, such as methyl, ethyl, propyl or butyl acrylate, or vinyl acetate, or any mixture thereof, which bears hydrolysable silane group(s) containing units.

As the non-polar comonomer, if present in the hydrolysable silane group(s) bearing LDPE copolymer as the polyolefin (a), such non-polar comonomer is other than the above defined polar comonomer. Preferably, the non-polar comonomer is other than a comonomer containing hydroxyl group(s), alkoxy group(s), carbonyl group(s), carboxyl group(s), ether group(s) or ester group(s). One group of preferable non-polar comonomers, if present in the hydrolysable silane group(s) bearing LDPE copolymer as the polyolefin (a), comprises, preferably consists of, monounsaturated (= one double bond) comonomer(s), preferably olefins, preferably alpha-olefins, more preferably $C_3$ to $C_{10}$ alpha-olefins, such as propylene, 1-butene, 1-hexene, 4-methyl-1-pentene, styrene, 1-octene, 1-nonene; polyunsaturated (= more than one double bond, such as diene) comonomer(s); or any mixtures thereof.

If the hydrolysable silane group(s) bearing LDPE polymer as the polyolefin (a) is a copolymer of ethylene with other comonomer(s), then the amount of the other comonomer(s) present in said LDPE polymer is preferably from 0.001 to 50 wt%, more preferably from 0.05 to 40 wt%, still more preferably less than 35 wt%, still more preferably less than 30 wt%, more preferably less than 25 wt%. If present, then the polar comonomer content of the polyolefin (a) is preferably at least 0.05 mol%, preferably 0.1 mol% or more, more preferably 0.2 mol% or more, and at least in insulation layer applications the polar comonomer content of the polyolefin (a) is preferably not more than 10 mol%, preferably not more than 6 mol%, preferably not more than 5 mol%, more preferably not more than 2,5 mol%, based on the polyolefin (a).

In this preferred second embodiment the silane group(s) containing units can be incorporated to the high pressure polyethylene, preferably to the LDPE polymer, by grafting or by copolymerizing ethylene with a silane group(s) containing comonomer and optionally with other comonomer(s), more preferably by copolymerizing ethylene with a silane group(s) containing comonomer. In this preferred second embodiment the polyolefin (a) is most preferably a LDPE copolymer of ethylene with a silane group containing comonomer as defined above and optionally with other comonomer(s).

Typically, and preferably in wire and cable (W&C) applications, the density of the hydrolysable silane group(s) bearing LDPE polymer as the polyolefin (a), is higher than 860 kg/m$^3$. Preferably the density of such LDPE polymer, is not higher than 960 kg/m$^3$, and preferably is from 900 to 945 kg/m$^3$. The MFR$_2$ (2.16 kg, 190 °C) of the hydrolysable silane groups bearing LDPE polymer as the polyolefin (a), is preferably 0.10 to 10.0 g/10 min, preferably from 0.30 to 5.0 g/10 min, preferably from 0.30 to 2.0 g/10 min, preferably from 0.30 to 1.50 g/10 min, preferably from 0.30 to 1.30 g/10 min, preferably from 0.30 to 1.20 g/10 min, preferably from 0.30 to 1.10 g/10 min, more preferably from 0.35 to 1.05 g/10 min, more preferably from 0.40 to 1.05 g/10 min, more preferably from 0.45 to 1.05 g/10 min, when measured according to ISO 1133 at 190 °C and at a load of 2.16 kg.

Accordingly, the LDPE polymer for the polyolefin (a) is preferably produced at high pressure by free radical initiated polymerisation (referred to as high pressure (HP) radical polymerization). The HP reactor can be e.g. a well known tubular or autoclave reactor or a mixture thereof, preferably a tubular reactor. The high pressure (HP) polymerisation and the adjustment of process conditions for further tailoring the other properties of the polyolefin depending on the desired end application are well known and described in the literature, and can readily be used by a skilled person. Suitable polymerisation temperatures range up to 400 °C, preferably from 80 to 350°C and pressure from 70 MPa, preferably 100 to 400 MPa, more preferably from 100 to 350 MPa. Pressure can be measured at least after compression stage and/or after the tubular reactor. Temperature can be measured at several points during all steps.

The incorporation of hydrolysable silane group(s) containing comonomer (as well as optional other comonomer(s)) and the control of the comonomer feed to obtain the desired final content of said hydrolysable silane group(s) containing units can be carried out in a well known manner and is within the skills of a skilled person. Similarly, the MFR of the polymerized polymer can be controlled e.g. by a chain transfer agent, as well known in the field.

Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

**The optional and preferable SR compound (= scorch retarding compound)**

It is preferred that the polymer composition comprises a scorch retarding compound which can be any compound that has an effect of preventing the premature crosslinking (Scorch) to occur before the cable is formed. Suitable SR compound can be any known or commercially available compound with such scorch retarding effect.

The scorch retarding compound is preferably a silicon containing compound and has a structure according to the formula (III)

$$(R^1)_x[Si(R^2)_y(R^3)_z]m \qquad (III)$$

wherein

$R^1$, which may be the same or different if more than one such group is present, is a monofunctional hydrocarbyl residue, or, if m = 2, is a bifunctional, hydrocarbyl residue, comprising from 1 to 100 carbon atoms;
$R^2$, which may be the same or different if more than one such group is present, is a hydrocarbyloxy residue comprising from 1 to 100 carbon atoms;
$R^3$, is $-R^4SiR^1_pR^2_q$, wherein
p is 0 to 3, preferably 0 to 2,
q is 0 to 3, preferably 1 to 3,
with the proviso that p + q is 3, and
$R^4$ is $-(CH_2)_rY_s(CH_2)_t-$ where r and t independently are 1 to 3, s is 0 or 1 and Y is a difunctional heteroatomic group selected from $-O-$, $-S-$, $-SO-$, $-SO_2-$, $-NH-$, $-NR^1-$ or $-PR'-$, where $R^1$ and $R^2$ are as previously defined; and
x is 0 to 3, y is 1 to 4, z is 0 or 1, with the proviso that x + y + z = 4;
and m = 1 or 2.

The more preferable SR compound is selected from a subgroup of a compound of formula (III), wherein $R^1$, which may be the same or different if more than one such group is present, is an, alkyl, alkenyl, arylalkyl, alkylaryl or aryl group containing 1 to 40 carbon atoms, with the proviso that if more than one $R^1$ group is present the total number of carbon atoms of the $R^1$ groups is at most 60.

More preferably, SR compound is selected from a subgroup (IIIa) of a compound of formula (III),

$$(R^1)_x[Si(R^2)_y(R^3)_z]_m \qquad (IIIa)$$

wherein

$R^1$ is a linear or branched $C_6-$ to $C_{22}$-alkyl group or a linear or branched $C_2-$ to $C_{22}$-alkenyl group;
$R^2$ is a linear or branched $C_1-$ to $C_{10}$-alkoxy group;
$R^3$, is $-R^4SiR^1_pR^2_q$, wherein
p is 0 to 3,
q is 0 to 3,
with the proviso that p + q is 3, and
$R^4$ is $-(CH_2)_rY_s(CH_2)_t-$ where r and t independently are 1 to 3, s is 0 or 1 and Y is a difunctional heteroatomic group selected from $-O-$, $-S-$, $-SO-$, $-SO_2-$, $-NH-$, $-NR^1-$ or $-PR^1-$, where $R^1$ and $R^2$ are as previously defined; and
x is 0 to 3, y is 1 to 4, z is 0 or 1, with the proviso that x + y + z = 4;
and m = 1.

Even more preferable SR compound is a compound of formula (IIIa), wherein x = 1, y = 3, and z = 0. Most preferred SR compound is hexadecyl trimethoxy silane.

The SR compound is preferably present in the polymer composition and the amount of the SR compound is preferably 0.001 to 0.2 mol/kg polymer composition, more preferably from 0.005 to 0.15 mol/kg polymer composition, more preferably from 0.01 to 0.1 mol/kg polymer composition, more preferably from 0.02 to 0.08 mol/kg polymer composition and most preferably form 0.02 to 0.05 mol/kg polymer composition.

**End use of the polymer composition**

The invention also provides an article, preferably a cable comprising a polymer composition of the invention which comprises a polyolefin (a) bearing hydrolysable silane group(s) containing units, wherein

- the amount of the hydrolysable silane group(s) containing units is from 0.010 to 0.081 mol/kg polyolefin (a), when measured according to "The amount of hydrolysable silane group(s)" as described below under "Determination methods", and wherein
- the polymer composition has a hot set elongation exceeding 30%, when measured according to "Hot set elongation test" using a crosslinked cable sample as described under "Determination methods" after crosslinking the sample in water at 90°C for 20 hours; as defined above or below.

The preferred article is a power cable, which here also includes insulated wires for e.g. appliances and automotives, more preferably a LV, MV or HV power cable, even more preferably a LV or MV power cable, which comprises a conductor surrounded by at least one layer comprising, preferably consisting of, a polymer composition of the invention which comprises a polyolefin (a) bearing hydrolysable silane group(s) containing units, wherein

- the amount of the hydrolysable silane group(s) containing units is from 0.010 to 0.081 mol/kg polyolefin (a), when measured according to "The amount of hydrolysable silane group(s)" as described below under "Determination methods", and wherein
- the polymer composition has a hot set elongation exceeding 30%, when measured according to "Hot set elongation test" using a crosslinked cable sample as described under "Determination methods" after crosslinking the sample in water at 90°C for 20 hours; as defined above or below.

The preferred power cable is selected from

- a cable (A) comprising a conductor surrounded by at least an insulating layer comprising, preferably consisting of, a polymer composition of the invention which comprises a polyolefin (a) bearing hydrolysable silane group(s) containing units, wherein
- the amount of the hydrolysable silane group(s) containing units is from 0.010 to 0.081 mol/kg polyolefin (a), when measured according to "The amount of hydrolysable silane group(s)" as described below under "Determination methods", and wherein
- the polymer composition has a hot set elongation exceeding 30%, when measured according to "Hot set elongation test" using a crosslinked cable sample as described under "Determination methods" after crosslinking the sample in water at 90°C for 20 hours; as defined above or below; or
- a cable (B) comprising a conductor surrounded by an inner semiconductive layer, an insulating layer and an outer semiconductive layer, in that order, wherein at least one the layers, preferably at least the insulation layer, comprises, preferably consists of, a polymer composition of the invention which comprises a polyolefin (a) bearing hydrolysable silane group(s) containing units, wherein
- the amount of the hydrolysable silane group(s) containing units is from 0.010 to 0.081 mol/kg polyolefin (a), when measured according to "The amount of hydrolysable silane group(s)" as described below under "Determination methods", and wherein
- the polymer composition has a hot set elongation exceeding 30%, when measured according to "Hot set elongation test" using a crosslinked cable sample as described under "Determination methods" after crosslinking the sample in water at 90°C for 20 hours; as defined above or below.

The cable (A) is preferably a LV power cable or wires intended for e.g. appliances and automotives. The cable (B) is preferably a MV power cable or a HV cable, more preferably a MV power cable.
The term "conductor" means herein above and below that the conductor comprises one or more wires. Moreover, the cable may comprise one or more such conductors. Preferably the conductor is an electrical conductor and comprises one or more metal wires.
In the preferred cable of the invention at least the insulation layer comprises the polymer composition of the invention.
The preferred embodiment is the power cable (A), which is more preferably for LV power cable applications, or the power cable (B), which is more preferably for MV power cable applications, most preferably the power cable (A) for LV power cable application. Moreover the preferred power cable (A) and (B) is an AC power cable, more preferably AC power cable (A) for LV power cable applications, or an AC power cable (B) for MV power cable applications, most preferably an AC power cable (A) for LV power cable applications.

In the embodiment of cable (B), the first and the second semiconductive compositions can be different or identical and comprise a polymer(s) which is preferably a polyolefin, or a mixture of polyolefins, and conductive filler, preferably carbon black. The polyolefin of the first and second semiconductive compostions can be any polyolefin suitable for a semiconductive layer, preferably a polyolefin as defined above for polyolefin (a), but without hydrolysable silane group(s) containing units or a polyolefin as defined above for polyolefin (a) bearing hydrolysable silane group(s) containing units. In the embodiment of cable (B), the insulating layer and at least one, preferably both, of the inner semiconductive layer and the outer semiconductive layer preferably comprise a polymer composition of the invention. In this case the polyolefin (a) and/or the SR compound of the polymer compositions of the layers can be same or different.

Insulating layers for the preferable low voltage power cables generally have a thickness of between 0.7 to 2.3 mm, dependant on the crossection of the conductor. Wires intended for automotives and appliances may have an insulation thickness down to 0.2 mm. The MV power cable insulation has typically a thickness above 5.0 mm. Naturally, the insulation layer of the HV power has higher thicknesses depending on their application area.

As well known the cable can optionally comprise further layers, e.g. layers surrounding the insulation layer or, if present, the outer semiconductive layers, such as screen(s), a jacketing layer(s), other protective layer(s) or any combinations thereof.

The cable of the invention is preferably crosslinkable and is preferably crosslinked after the formation of at least the cable layer comprising the polymer composition of the invention. Thus preferably a crosslinked cable is provided, comprising a conductor surrounded by at least one layer comprising a crosslinked polymer composition of the invention. More preferably, the crosslinked cable is a crosslinked cable (A) or a crosslinked cable (B), as defined above or below, wherein at least the layer comprising the polymer composition of the invention has been crosslinked using a silanol condensation catalyst, which is preferably an aromatic organic sulphonic acid, more preferably an organic sulphonic acid, even more preferably $Ar(SO_3H)_x$ (II), as defined above or below.

The invention further provides a process for producing a cable comprising a step of forming at least one cable layer using the polymer composition as defined above or below.

The preferred process is a process for producing a cable of the invention as defined above, whereby the process comprises the step of

- applying on a conductor, preferably by (co)extrusion, one or more layers, wherein at least one layer comprises, preferably consists of, a polymer composition of the invention which comprises a polyolefin (a) bearing hydrolysable silane group(s) containing units, wherein
- the amount of the hydrolysable silane group(s) containing units is from 0.010 to 0.081 mol/kg polyolefin (a), when measured according to "The amount of hydrolysable silane group(s)" as described below under "Determination methods", and wherein
- the polymer composition has a hot set elongation exceeding 30%, when measured according to "Hot set elongation test" using a crosslinked cable sample as described under "Determination methods" after crosslinking the sample in water at 90°C for 20 hours; as defined above or below.

The term "(co)extrusion" means herein that in case of two or more layers, said layers can be extruded in separate steps, or at least two or all of said layers can be coextruded in a same extrusion step, as well known in the art. The term "(co)extrusion" means herein also that all or part of the layer(s) are formed simultaneously using one or more extrusion heads. For instance a triple extrusion can be used for forming three layers. (Co)extrusion can be effected in any conventional cable extruder, e.g. a single or twin screw extruder.

The more preferable cable process of the invention produces:

(i) a cable (A), wherein the process comprises the steps of

- applying on a conductor, preferably by (co)extrusion, at least an insulation layer comprising, preferably consisting of, a polymer composition of the invention which comprises a polyolefin (a) bearing hydrolysable silane group(s) containing units, wherein
- the amount of the hydrolysable silane group(s) containing units is from 0.010 to 0.081 mol/kg polyolefin (a), when measured according to "The amount of hydrolysable silane group(s)" as described below under "Determination methods", and wherein
- the polymer composition has a hot set elongation exceeding 30%, when measured according to "Hot set elongation test" using a crosslinked cable sample as described under "Determination methods" after crosslinking the sample in water at 90°C for 20 hours; as defined above or below, or

(ii) a cable (B), wherein the process comprises the steps of

- applying on a conductor, preferably by (co)extrusion, an inner semiconductive layer comprising a first semiconductive composition, an insulation layer comprising an insulation composition and an outer semiconductive layer comprising a second semiconductive composition, in that order,

wherein the composition of at least one layer, preferably at least the insulation composition of the insulation layer comprises, preferably consists of, a polymer composition of the invention which comprises a polyolefin (a) bearing hydrolysable silane group(s) containing units, wherein

- the amount of the hydrolysable silane group(s) containing units is from 0.010 to 0.081 mol/kg polyolefin (a), when measured according to "The amount of hydrolysable silane group(s)" as described below under "Determination methods", and wherein
- the polymer composition has a hot set elongation exceeding 30%, when measured according to "Hot set elongation test" using a crosslinked cable sample as described under "Determination methods" after crosslinking the sample in water at 90°C for 20 hours; as defined above or below.

A more preferable cable production process of the invention provides a process for producing

(i) a cable (A) as defined above, wherein the process comprises the steps of

(a1) providing and mixing, preferably meltmixing in an extruder, at least an insulation composition comprising, preferably consisting of, a polymer composition of the invention which comprises a polyolefin (a) bearing hydrolysable silane group(s) containing units, wherein

- the amount of the hydrolysable silane group(s) containing units is from 0.010 to 0.081 mol/kg polyolefin (a), when measured according to "The amount of hydrolysable silane group(s)" as described below under "Determination methods", and wherein
- the polymer composition has a hot set elongation exceeding 30%, when measured according to "Hot set elongation test" using a crosslinked cable sample as described under "Determination methods" after crosslinking the sample in water at 90°C for 20 hours; as defined above or below,

(b1) applying at least a meltmix of the insulation composition obtained from step (a1), preferably by (co)extrusion, on a conductor to form at least an insulation layer; and
(c1) optionally, and preferably, crosslinking the obtained at least the insulation layer, in the presence of a silanol condensation catalyst and water; or

(ii) a cable (B) as defined above comprising a conductor surrounded by an inner semiconductive layer, an insulation layer, and an outer semiconductive layer, in that order, wherein the process comprises the steps of

(a1)

- providing and mixing, preferably meltmixing in an extruder, a first semiconductive composition comprising a polymer, a conductive filler, preferably carbon black, and optionally further component(s) for the inner semiconductive layer,
- providing and mixing, preferably meltmixing in an extruder, an insulation composition for the insulation layer,
- providing and mixing, preferably meltmixing in an extruder, a second semiconductive composition comprising a polymer, a conductive filler, preferably a carbon black, and optionally further component(s) for the outer semiconductive layer;

(b1)

- applying on a conductor, preferably by coextrusion,
- a meltmix of the first semiconductive composition obtained from step (a1) to form the inner semiconductive layer,
- a meltmix of polymer composition obtained from step (a1) to form the insulation layer, and
- a meltmix of the second semiconductive composition obtained from step (a1) to form the outer semiconductive layer,

wherein at least one of the layers, preferably at least the insulation composition of the insulation layer, comprises, preferably consists of, a polymer composition of the invention which comprises a polyolefin (a) bearing hydrolysable silane group(s) containing units, wherein

- the amount of the hydrolysable silane group(s) containing units is from 0.010 to 0.081 mol/kg polyolefin (a), when measured according to "The amount of hydrolysable silane group(s)" as described below under "Determination methods", and wherein
- the polymer composition has a hot set elongation exceeding 30%, when measured according to "Hot set elongation test" using a crosslinked cable sample as described under "Determination methods" after crosslinking the sample in water at 90°C for 20 hours; as defined above or below, or in claims, including the preferred embodiments thereof; and

(c1) optionally, and preferably, crosslinking the obtained at least one of the inner semiconductive layer, insulation layer or outer semiconductive layer, preferably crosslinking at least the insulation layer, comprising the polymer composition of the invention, in the presence of a silanol catalyst and water.

As well known a meltmix of the polymer composition or component(s) thereof, is applied to form a layer. Meltmixing means mixing above the melting point of at least the major polymer component(s) of the obtained mixture and is carried out for example, without limiting to, in a temperature of at least 10-15°C above the melting or softening point of polymer component(s). The mixing step (a1) can be carried out in the cable extruder. The meltmixing step may comprise a separate mixing step in a separate mixer, e.g. kneader, arranged in connection and preceding the cable extruder of the cable production line. Mixing in the preceding separate mixer can be carried out by mixing with or without external heating (heating with an external source) of the component(s).

The polymer composition of the invention can be produced before or during the cable production process. Moreover the polymer composition(s) of the layer(s) can each independently comprise part or all of the components of the final composition, before providing to the (melt)mixing step (a1) of the cable production process. Then the remaining component(s), if any, are provided prior to or during the cable formation.

Accordingly, the optional and preferable SR compound can be mixed with the polyolefin (a), e.g. by meltmixing, and the obtained meltmix is pelletized to pellets for use in cable production. Pellets mean herein generally any polymer product which is formed from reactor-made polymer (obtained directly from the reactor) by post-reactor modification to a solid polymer particles. Pellets can be of any size and shape. The obtained pellets are then used for cable production.

Alternatively, the polyolefin (a) and the optional and preferable SR compound of the invention can be provided separately to the cable production line. E.g. the optional and preferable SR compound of the invention can be provided in a well known master batch, to the mixing step (a1) of the cable production process, and combined with the polyolefin (a) component during the production process.

More preferably, the optional and preferable SR compound is incorporated to the pellets of the polyolefin (a). In this embodiment it is more preferred that the polymer composition of the invention is provided to the mixing step (a1) of the cable production process in a suitable product form, such as a pellet product.

All or part of the optional other component(s), such as further polymer component(s) or additive(s) can be present in the polymer composition before providing to the mixing step (a1) of the cable preparation process or can be added, e.g by the cable producer, during the mixing step (a1) of the cable production process.

If, and preferably, the polymer composition is crosslinkable and is crosslinked after the cable formation, then the silanol condensation catalyst, which is preferably as defined above, can be mixed with the components of the polymer composition before or during mixing step (a1) or the silanol condensation catalyst is brought to contact with the polymer composition after formation of the cable layer comprising, consisting of, the polymer composition of the invention. More preferably, in the preferred embodiment, wherein at least the insulation layer comprises, preferably consists of, the polymer composition of the invention, then the silanol condensation catalyst is incorporated to the pellets of the polymer composition e.g. via a catalyst master batch. The obtained pellets are then provided to the cable production step.

As already mentioned, the embodiment of cable (B) is preferred and at least the insulation layer comprises, preferably consists of, the polymer composition of the invention. Moreover, in this embodiment the polyolefin (a) and preferably the SR compound of the polymer composition are combined together before the polymer composition is introduced, preferably in pellet form, to the cable production line.

In the preferred cable production process the obtained power cable (A) or cable (B) is crosslinked in step (c1). The crosslinking is carried out in the presence of a silanol condensation catalyst, which is preferably a sulphonic acid compound as defined above, and water, also called as moisture curing. Water can be in form of a liquid or vapour, or a combination thereof. Usually, the moisture curing is performed in ambient conditions or in a so called sauna or water bath at temperatures of 70 to 100 °C.

In this preferred embodiment of the cable production process a crosslinked power cable (B) is produced, wherein at least the insulation layer comprises, preferably consists of, the polymer composition of the invention which is crosslinked in the crosslinking step (c1) and optionally one or both of the inner semiconductive layer and outer semiconductive layer, preferably at least the inner semiconductive layer of the cable (B), is crosslinked in the crosslinking step (c1).

A crosslinked cable obtainable by the process is also provided.

**Determination methods**

Unless otherwise stated in the description or in the experimental part, the following methods were used for the property determination.

**Wt%:** % by weight

**Total amount** means weight, if in %, then 100wt%. E.g. the total amount (100 wt%) of the polymer composition.

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$) or 21.6 kg ($MFR_{21}$).

**Density**

Low density polyethylene (LDPE): The density was measured according to ISO 1183-2. The sample preparation was executed according to ISO 1872-2 Table 3 Q (compression moulding).

Low pressure process polyethylene: Density of the polymer was measured according to ISO 1183 / 1872-2B.

**Scorch Tape Test**

The test compositions were extruded in a 19 mm Brabender tape extruder with a length/diameter ratio of 20 with a tape forming die having a melt temperature of 210 °C. A 4 :1 compression ratio screw was used, and the heat was adjusted to 160, 180 and 210°C for the different zones of the extruder. Water cooling was used on the feeding zone. The rotation speed was 30 rpm. Extrusion took place for 30 min.

Thereafter the 0,5 mm thick tapes produced were visually inspected and the surface quality was rated according to the amount of gels counted, haziness and irregularities of the tape. In the rating, the numbers mean: 1 is good (the tape has no gels, perfect finish, no irregular shaped edges, thin and transparent look), 3 is acceptable to be used for commercial production (there are a number of small gels, the tape is somewhat hazy but still the edges of the tape is perfect), and above 3 is not acceptable for commercial use (there are significant amount of small gels and or some larger ones > 1 mm).

**Tape sample for Hot set elongation: Production of 1.7 mm thick tapes for determination of crosslinking (Hot set elongation) performance of a test polymer composition**

The tape sample was prepared from a test polymer composition comprising a crosslinking catalyst. The same conditions as for the scorch tape test described above with the exception that the temperature settings of the three zones are adjusted to 160, 180 and 180°C. The die was change to thicker one with an opening of 1.7 mm.

**Cable sample for Hot set elongation and elongation at break: Production of cable samples for determination of crosslinking (Hot set elongation) performance and Elongation at break performance of a test polymer composition**

The insulation layer of the cable sample was prepared from a test polymer composition comprising a crosslinking catalyst. Cables consisting of a 7 $mm^2$ solid aluminium conductor and an insulation thickness of 0,7 mm were produced in Nokia-Maillefer 60 mm extruder at a line speed of 75 meter/minute by applying the following conditions;

Conductor temperature: 110°C

Cooling bath temperature: 23°C

Extruder screw: Elise

Wire Guide: 3,1 mm

Die: 4,4mm

Temperature profile: 150, 160, 170, 170, 170, 170, 170, 170°C.

**Hot set elongation test**

Test samples were prepared as described in "Determination methods" under *"Tape sample for Hot set"* or *"Cable sample for Hot set"*, as given in the context, and were used to determine the hot set properties. Three dumb-bells sample, taken out along extrusion direction were prepared according to ISO527 5A from the 1.7+-0,1 mm thick crosslinked tape or thick crosslinked insulation layer, as indicated in tables below. The hot set test were made according to EN60811-2-1 (hot set test) by measuring the thermal deformation. Reference lines, were marked 20 mm apart on the dumb-bells. Each test sample was fixed vertically from upper end thereof in the oven and the load of 0.2 MPa are attached to the lower end of each test sample. After 15 min, 200°C in oven the distance between the pre-marked lines were measured and the percentage hot set elongation calculated, elongation %. For permanent set % , the tensile force (weight) was removed from the test samples and after recovered in 200°C for 5 minutes and then let to cool in room temperature to ambient temperature. The permanent set % was calculated from the distance between the marked lines The average of the three test were reported.

**Content (wt% and mol%) of polar comonomer:**

Comonomer content (wt%) of the polar comonomer was determined in a known manner based on Fourier transform infrared spectroscopy (FTIR) determination calibrated with $^{13}$C-NMR as described in Haslam J, Willis HA, Squirrel DC. Identification and analysis of plastics, 2nd ed. London Iliffe books; 1972. FTIR instrument was a Perkin Elmer 2000, 1scann, resolution 4cm$^{-1}$.

For determination of the comonomers, films with thickness 0.1 mm were prepared. The peak for the used comonomer was compared to the peak of polyethylene as evident for a skilled person (e.g. the peak for butyl acrylate at 3450 cm$^{-1}$ was compared to the peak of polyethylene at 2020 cm$^{-1}$). The weight-% was converted to mol-% by calculation based on the total moles of polymerisable monomers.

**Butyl Acrylate Content**

Co monomer content (wt %) was determined in a known manner based on Fourier transform infrared spectroscopy (FTIR) determination calibrated with $^{13}$C-NMR. The peak for the co monomer was compared to the peak of polyethylene (e.g. the peak for butyl acrylate at 3450 cm$^{-1}$ was compared to the peak of polyethylene at 2020 cm$^{-1}$ and the peak for silane at 945 cm$^{-1}$ was compared to the peak of polyethylene at 2665 cm$^{-1}$. The calibration with $^{13}$C-NMR is effected in a conventional manner which is well documented in the literature.

**The content of hydrolysable silane group(s)**

The amount of hydrolysable silane group(s) $(Si(Y)_{3-q})$ was determined using X-ray fluorescence analysis:

The pellet sample was pressed to a 3 mm thick plaque (150°C for 2 minutes, under pressure of 5 bar and cooled to room temperature). Si-atom content was analysed by wavelength dispersive XRF (AXS S4 Pioneer Sequential X-ray Spectrometer supplied by Bruker). The pellet sample was pressed to a 3 mm thick plaque (150°C for 2 minutes, under pressure of 5 bar and cooled to room temperature).

Generally, in XRF- method, the sample is irradiated by electromagnetic waves with wavelengths 0.01-10 nm. The elements present in the sample will then emit fluorescent X-ray radiation with discrete energies that are characteristic for each element. By measuring the intensities of the emitted energies, quantitative analysis can be performed. The quantitative methods are calibrated with compounds with known concentrations of the element of interest e.g. prepared in a Brabender compounder.

The XRF results show the total content (wt%) of Si and are then calculated and expressed herein as Mol content of hydrolysable silane group(s) $(Si(Y)_{3-q})$/kg polymer (in the inventive composition polyolefin (a)) according to the following formula;

$$W_{silane}/M_{silane}/ \left( W_{silane}/M_{silane} + W_{etylene}/M_{ethylene} + W_{Co\text{-}monemer\text{-}1}/M_{co\text{-}monomer\text{-}1} + .. W_{Co\text{-}monemer\text{-}n}/M_{co\text{-}monomer\text{-}n} \right)$$

In which;

$W_{silane}$=The weight in gram of the hydrolysable silane group(s) $(Si(Y)_{3-q}$/kg polymer (a)
$M_{silane}$=The molecular weight the hydrolysable silane group(s) $(Si(Y)_{3-q}$

$W_{ethylene}$=The weight in gram of ethylene/kg polymer (a)

$M_{ethylene}$=The molecular weight of ethylene

$W_{co-monomer-1}$=The weight in gram of comonomer-1/kg polymer (a) if present

$M_{co-monomer-1}$=The molecular weight of co-monomer-1 if present

$W_{co-monomer-n}$

=The weight in gram of co-monomer-n/kg polymer (a) if present

$M_{co-monomer}$=The molecular weight of commoner-1 if present

**Mol SR/kg Polymer Composition**

The amount of SR added to the polymer composition was weighed and the molar amount calculated in accordance with the following formula;

$$W_{SR}/M_{SR}$$

$W_{SR}$=The weight in gram of SR added to one kg of the complete polymer composition

$M_{SR}$=The molecular weight of the SR

**Determination of Elongation at Break without a Thermo Oxidative Ageing and After Optional Thermo Oxidative Ageing of Cable Samples**

**Elongation at Break of Cable Samples without a Thermo Oxidative Ageing:** The Elongation at break of the 150 mm stripped cable samples prepared as described in the "Determination methods" under "Cable sample for Hot set elongation and elongation at break" were measured in accordance with ISO 527-1:1993 at 23°C and 50% relative humidity on a Doli-Alwetron TCT 25 tensile tester at a speed of 250mm/min. A digital extensiometer with a starting distance of 50mm was used for determination of the elongation at break. The starting distance between the clamps of the tensile tester was 115 mm. A 1 kilo Newton load cell was used for the measurements. The samples were conditioned for minimum 16 hours at 23+/-2°C and 50% relative humidity prior testing. The median value out of 10 samples is reported herein.

**Optional: Elongation at Break after a Thermo Oxidative Ageing of Cable Samples**

The non-stripped cable samples were aged in a Elastocon cellular oven at 135°C at air flow of 200cm$^3$/hour in accordance with IEC 60811-1-2. Prior ageing the 10 samples were conditioned at 70+/2°C for 24 hours.

**Experimental part**

The components and their amounts of the inventive and reference compositions, the crosslinking conditions and period, as well as the results of the measurements are given in tables below.

**Preparation of examples**

Comparative Examples 1 and 2

The ethylene vinyl trimethoxy silane copolymers polymer Ac and Bc were produced in a tubular reactor as described below for inventive example 2 at a maximum temperature of 310°C and 230 MPa. In order to regulate $MFR_{2,16}$ propylene was used as chain transfer agent. The VTMS feeds were regulated in order to produce copolymers containing VTMS 0.14 and 0.091 mol/kg polymer.

The amount of the vinyl trimethoxy silane units, VTMS, (=silane group(s) containing units), density and $MFR_2$ are given in the table 2.

The copolymers were extruded to 1.7 mm thick tapes prepared as described in "Determination methods" (Tape sample for Hot set elongation). Prior extrusion 5 wt% of a Low density polyethylene ($MFR_2$=2, Density 923 kg/m$^3$) based catalyst master batch (CMBDBTL) containing 3 wt% of dibutyl tin dilaurate as crosslinking catalyst and 2 wt% Irganox 1010 as stabiliser was dry blended into the silane copolymers. The dry blend was impregnated with 1.5 wt% of hexadecyl trimethoxy silane (Scorch retarding compound) two hours prior extrusion for the samples which is containing scorch retardant additive (see table below) The tapes were crosslinked in a water bath at 90°C for 2, 4, 10, 16 and 20 hours, followed by determination of hot set elongation and elongation at break prior and after ageing at 135°C for 168 hours in a heating oven in air.

Table 1.

|  | Comparative Example 1 | Comparative example 2 |
|---|---|---|
| Name of polymer | Copolymer A | Copolymer B |
| MFR$_2$,16, g/10 min | 0.9 | 0.9 |
| Density, kg/m$^3$ | 923 | 923 |
| VTMS, mol/kg polymer | 0.14 | 0.091 |
| Scorch retarder, mol/kg polymer composition | 0.043 | 0.043 |
| Catalyst master batch | 5wt% CMDBTL | 5wt% CMDBTL |
| Hot-Set, %<br>2h<br>4h<br>10h<br>16h<br>20h | 70<br>43<br>28<br>27<br>28 | 102<br>58<br>40<br>32<br>30 |
| Elongation at break prior ageing/after ageing, %<br>2h<br>4h<br>10h<br>16h<br>20h | 392/245<br>329/253<br>282/242<br>266/246<br>251/231 | 422/306<br>374/319<br>349/308<br>337/302<br>308/265 |
| Retained Ultimate Elongation (RUE), %<br>2h<br>4h<br>10h<br>16h<br>20h | -37<br>-23<br>-14<br>-8<br>-8 | -28<br>-15<br>-12<br>-11<br>-14 |
| Scorch tape rating | 1 | 1 |

In order to fulfil the Hot-Set requirement of a cable insulation outlined in e.g. IEC 60502-1 the maximum required hot-set elongation should be below 175% and the retained ultimate elongation after ageing at 135°C for 168 hours should be below 25%. Polymer A with a higher VTMS content needs close to 4 hours curing time in order to meet the retained ultimate elongation requirement of common specifications on cable insulations, in spite of that the hot-set elongation requirements is with margin met already after 2 hours curing time Also for Polymer B the RUE criteria is not med after 2 hours curing in spite of with margin meeting the hot-set elongation criteria.

Inventive Example 2

Ethylene vinyl trimethoxy silane copolymer (Polymer D) was produced in a 660 m long split feed high pressure tubular reactor (Union Carbide type A-1). The inner wall diameter is 32 mm. Chain Transfer Agent (propylene), initiators (t-butylperoxy 2-ethylhexanoate (Luperox 26) and air) and co-monomers were added to the reactor system in a conventional manner. The ethylene vinyl tri methoxy silane copolymer polymer D were produced in a tubular reactor at a maximum temperature of 310°C and 230 MPa. In order to regulate MFR$_{2,16}$ propylene was used as chain transfer agent. The VTMS feed were regulated in order to produce copolymers containing VTMS 0.072 mol/kg polymer. The amount of the vinyl trimethoxy silane units, VTMS, (=silane group(s) containing units), density and MFR$_2$ are given in the table 3

1.2 mm insulated cable samples of the produced polymers were prepared as described in the "Determination methods" under "Cable sample for Hot set elongation and elongation at break". Prior extrusion 5 wt% of a low density polyethylene (MFR$_2$=2, Density 923 kg/m$^3$) based catalyst master batch (CMDBSA) containing 1,7 wt% dodecyl benzene sulphonic acid as crosslinking catalyst and 2% Irganox 1010 as stabiliser was dry blended into the silane copolymers.

The dry blend was impregnated with 1.5 % of hexadecyl trimethoxy silane (Scorch retarding compound) two hours prior extrusion.

Following crosslinking at ambient conditions (23°C, 55 % relative humidity) hot-set elongation as well as Elongation at break measurements prior and after ageing at 135°C for 168 hours in a heating oven in air was performed.

Table 2

|  | Inventive Example 2 |
| --- | --- |
| Name of polymer | Copolymer D |
| MFR$_{2,16}$, g/10 min | 1.0 |
| Density, kg/m$^3$ | 923 |
| VTMS, mol/kg polymer | 0.072 |
| Scorch retarder, mol/kg polymer composition | 0.043 |
| Catalyst master batch | 5wt% CMDBSA |
| Hot-Set Elongation, %<br>1day<br>2days<br>3days<br>5days<br>7days<br>10days<br>14days<br>21days | Break<br>198<br>150<br>126<br>102<br>78<br>66<br>59 |
| Elongation at break prior ageing/after ageing, %<br>1day<br>2days<br>3 days<br>5 days<br>7days<br>10days<br>14days<br>21days | <br>439/358<br>439/361<br>434/313<br>424/342<br>394/340<br>383/349<br>396/337<br>390/331 |
| Retained Ultimate Elongation, %<br>1day<br>2days<br>3days<br>5days<br>7days<br>10days<br>14days<br>21days | <br>-18<br>-18<br>-20<br>-16<br>-16<br>-17<br>-15<br>-14 |
| Scorch tape rating | 1 |

When the VTMS content is reduced within the range of the invention a dramatic difference in retained ultimate elongations is found and the limit of being below 25% is reached for all crosslinking conditions and also at very high hot-set values even the one exceeding the specification limit of 175%. This is a great advantage as the only determination factor for fulfilling the specifications are the hot-set elongation.

Inventive Examples 3 and 4

The ethylene vinyl trimethoxy silane copolymers (Polymers E and F) were produced in the same tubular reactor as described in inventive example 2 and analogously to polymer D using a maximum temperature of 310°C and 230 MPa. In order to regulate $MFR_{2,16}$ propylene was used as chain transfer agent. The VTMS feeds were regulated in order to produce copolymers containing VTMS 0,055 and 0,047 mol/kg polymer. The amount of the vinyl trimethoxy silane units, VTMS, (=silane group(s) containing units), density and $MFR_2$ are given in the table 4

1.2 mm insulated cable samples of the produced polymers were prepared as described in the "Determination methods" under "Cable sample for Hot set elongation and elongation at break". Prior extrusion 5 wt% of a low density polyethylene ($MFR_2$=2, Density 923 kg/m$^3$) based catalyst master batch (CMDBSA) containing 1.7 wt% dodecyl benzene sulphonic acid as crosslinking catalyst and 2wt% Irganox 1010 as stabiliser was dry blended into the silane copolymers. The dry blend was impregnated with 1.5 wt% of hexadecyl trimethoxy silane (Scorch retarding compound) two hours prior extrusion.

Following crosslinking at ambient conditions (23°C, 55 % relative humidity) hot-set elongation as well as Elongation at break measurements prior and after ageing at 135°C for 168 hours in a heating oven in air was performed.

Table 3

| | Inventive Example 3 | Inventive Example 4 |
|---|---|---|
| Name of polymer | Polymer E | Polymer F |
| $MFR_{2,16}$, g/10 min | 1.0 | 1.0 |
| Density, kg/m$^3$ | 923 | 923 |
| VTMS, mol/kg polymer | 0.055 | 0.047 |
| Scorch retarder, mol/kg polymer composition | 0.043 | 0.043 |
| Catalyst master batch | 5wt% CMDBSA | 5wt% CMDBSA |
| Hot-Set Elongation, %<br>1day<br>2days<br>3days<br>5days<br>7days<br>10days<br>14days<br>21days | 412<br>238<br>189<br>162<br>138<br>116<br>104<br>84 | Break<br>Break<br>292<br>250<br>199<br>194<br>168<br>142 |
| Elongation at break Prior/After Ageing, %<br>1day<br>2days<br>3days<br>5days<br>7days<br>10days<br>14days<br>21days | 492/380<br>481/405<br>443/406<br>443/381<br>456/395<br>415/382<br>432/372<br>414/364 | 489/451<br>484/424<br>470/441<br>464/418<br>473/413<br>474/441<br>476/431<br>463/429 |
| Retained Ultimate<br>Elongation, %<br>1day<br>2days<br>3days<br>5days<br>7days<br>10days<br>14days | -23<br>-16<br>-8<br>-14<br>-13<br>-8<br>-14<br>-12 | -8<br>-12<br>-6<br>-10<br>-13<br>-7<br>-9<br>-7 |

(continued)

|  | Inventive Example 3 | Inventive Example 4 |
|---|---|---|
| 21days |  |  |
| Scorch tape rating | 1 | 1 |

Also for these lower VTMS content the retained ultimate elongation criteria is fulfilled at all crosslinking conditions and hot set elongations.

Inventive Example 5

In order to determine the final hot-set level, cable samples as described in the "Determination methods" under "Cable sample for Hot set elongation and elongation at break" were prepared for Polymers A-F. Polymer C (Ethylene vinyl trimethoxy silane copolymer) was produced analogously to Polymer D, but regulating the VTMS feed to obtain the final VTMS content of 0.088 mol/kg polymer. The obtained cables samples were crosslinked in water at 90°C for 20 hours followed by determination of the hot-set elongation. All samples have a $MFR_{2,16}$ between 0.9-1.0.

Table 4

| Polymer | Catalyst master batch | Copolymer VTMS content, mol/kg polymer | Hot-set elongation when cured in water at 90°C for 20 hours, % |
|---|---|---|---|
| A | 5wt% CMDBTL | 0,14 | 28 |
| B | 5wt% CMDBTL | 0.091 | 30 |
| c | 5wt%CMDBSA | 0.088 | 32 |
| D | 5wt%CMDBSA | 0.072 | 49 |
| E | 5wt%CMDBSA | 0.055 | 79 |
| F | 5wt%CMDBSA | 0.047 | 121 |

The VTMS content is plotted versus the hot-set elongation of the fully cured samples in the figure 1 below.
Figure 1 shows For the non-inventive copolymers the final hot-set elongation is 30% or below and in an area where an increased silane content has very low influence on the final hot-set elongation. The inventive copolymers on the other hand has all a final Hot-set level exceeding 30% and are in an area in which a decreased VTMS content has a strong influence on the final hot-set elongation. Surprisingly when the final hot-set elongation levels is in this range the retained ultimate elongation levels are no dependant of the curing level and are reaching a RUE value below 25% for all crosslinking degrees.

**Claims**

1. A polymer composition which comprises a polyolefin (a) bearing hydrolysable silane group(s) containing units, wherein

   - the amount of the hydrolysable silane group(s) containing units is from 0.010 to 0.081 mol/kg polyolefin (a), when measured according to "The amount of hydrolysable silane group(s)" as described below under "Determination methods", and wherein
   - the polymer composition has a hot set elongation exceeding 30%, when measured according to "Hot set elongation test" using a crosslinked cable sample as described under "Determination methods" after crosslinking the sample in water at 90°C for 20 hours.

2. The polymer composition according to claim 1, wherein the polyolefin (a) has hydrolysable silane group(s) containing units in an amount of from 0.020 to 0.077 mol/kg polyolefin (a), preferably from 0.027 to 0.074 mol/kg polyolefin (a), preferably from 0.033 to 0.073 mol/kg polyolefin (a), preferably from 0.041 to 0.072 mol/kg polyolefin (a).

3. The polymer composition according to any of the preceding claims, wherein the polymer composition has said hot set elongation of less than 180%, more preferably of 150% or less and most preferably of less than 130%.

4. The polymer composition according to any of the preceding claims, wherein the polyolefin (a) bearing hydrolysable silane group(s) containing units has an $MFR_2$ of from 0.10 to 10.0 g/10 min, preferably from 0.30 to 5.0 g/10 min, preferably from 0.30 to 2.0 g/10 min, preferably from 0.30 to 1.50 g/10 min, preferably from 0.30 to 1.30 g/10 min, preferably from 0.30 to 1.20 g/10 min, when measured according to ISO 1133 at 190 °C and at a load of 2.16 kg.

5. The polymer composition according to any of the preceding claims, wherein the hydrolysable silane group(s) containing units are introduced to polyolefin (a) by copolymerising an olefin comonomer with a hydrolysable silane group containing comonomer or by grafting a hydrolysable silane group containing compound to a polyolefin polymer, preferably by copolymerising an olefin comonomer with a hydrolysable silane group containing comonomer.

6. The polymer composition according to any of the preceding claims, wherein the polyolefin (a) bearing hydrolysable silane group(s) containing units is a propylene polymer or an ethylene copolymer, preferably an ethylene copolymer, more preferably a copolymer of ethylene with a hydrolysable silane group(s) containing comonomer which is produced in a the presence of an olefin polymerisation catalyst or a copolymer of ethylene with a hydrolysable silane group(s) containing comonomer which is produced in a high pressure process.

7. The polymer composition according to any of the preceding claims, wherein the polyolefin (a) bearing hydrolysable silane group(s) containing units is a low density homopolymer of ethylene (referred herein as LDPE homopolymer) bearing hydrolysable silane group(s) containing units or a low density copolymer of ethylene (LDPE copolymer) with at least one comonomer and bearing hydrolysable silane group(s) containing units, preferably LDPE copolymer of ethylene with at least silane groups containing comonomer and optionally with one or more other comonomer(s), which is preferably selected from polar comonomer(s) containing carboxyl and/or ester group(s), more preferably selected from the groups of acrylate(s), methacrylate(s) or acetate(s).

8. The polymer composition according to any of the preceding claims, wherein the hydrolysable silane group(s) containing comonomer or compound is an unsaturated silane compound represented by the formula

$$R^1SiR^2_qY_{3-q} \qquad \text{(I)}$$

wherein
$R^1$ is an ethylenically unsaturated hydrocarbyl, hydrocarbyloxy or (meth)acryloxy hydrocarbyl group,
each $R^2$ is independently an aliphatic saturated hydrocarbyl group,
Y which may be the same or different, is a hydrolysable organic group and
q is 0, 1 or 2.

9. Polyolefin composition according to any of the preceding claims, wherein the scorch retarding compound is a silicon containing compound has a structure according to the formula (III)

$$(R^1)_x[Si(R^2)_y(R^3)_z]m \qquad \text{(III)}$$

wherein
$R^1$, which may be the same or different if more than one such group is present, is a monofunctional hydrocarbyl residue, or, if m = 2, is a bifunctional, hydrocarbyl residue, comprising from 1 to 100 carbon atoms;
$R^2$, which may be the same or different if more than one such group is present, is a hydrocarbyloxy residue comprising from 1 to 100 carbon atoms;
$R^3$, is -$R^4SiR^1_pR^2_q$, wherein
p is 0 to 3, preferably 0 to 2,
q is 0 to 3, preferably 1 to 3,
with the proviso that p + q is 3, and
$R^4$ is -$(CH_2)_rY_s(CH_2)_t$- where r and t independently are 1 to 3, s is 0 or 1 and Y is a difunctional heteroatomic group selected from -O-, -S-, -SO-, -$SO_2$-, -NH-, -$NR^1$- or -$PR^1$-, where $R^1$ and $R^2$ are as previously defined; and
x is 0 to 3, y is 1 to 4, z is 0 or 1, with the proviso that x + y + z = 4;
and m = 1 or 2.

10. The polymer composition according to any of the preceding claims, wherein the polymer composition further comprises a scorch retarding compound and, preferably, the amount of the scorch retarding compound is at least 0.001 mol/kg polymer composition, preferably 0.001 to 0.2 mol/kg polymer composition, more preferably from 0.005 to 0.15 mol/kg polymer composition.

11. The polymer composition according to any of the preceding claims, wherein the polymer composition further comprises a silanol condensation catalyst, which is preferably selected from carboxylates of metals, such as tin, zinc, iron, lead and cobalt; from a titanium compound bearing a group hydrolysable to a Brönsted acid; from

organic bases; from inorganic acids; and from organic acids; more preferably from carboxylates of metals, such as tin, zinc, iron, lead and cobalt, from titanium compound bearing a group hydrolysable to a Brönsted acid as defined above or from organic acids. The silanol condensation catalyst is more preferably selected from DBTL, DOTL, particularly DOTL; titanium compound bearing a group hydrolysable to a Brönsted acid as defined above); or an aromatic organic sulphonic acid, which is preferably an organic sulphonic acid which comprises the structural element:

$$Ar(SO_3H)_x \qquad (II)$$

wherein Ar is an aryl group which may be substituted or non- substituted, and if substituted, then preferably with at least one hydrocarbyl group up to 50 carbon atoms, and x is at least 1; or a precursor of the sulphonic acid of formula (II) including an acid anhydride thereof or a sulphonic acid of formula (II) that has been provided with a hydrolysable protective group(s), e.g. an acetyl group that is removable by hydrolysis.

12. The polymer composition according to any of the preceding claims, wherein the silanol condensation catalyst is present in an amount of 0,00001 to 0,1 mol/kg polymer composition preferably 0.0001 to 0.01 mol/kg polymer composition, more preferably 0.0005 to 0,005 mol/kg polymer composition.

13. An article comprising a polymer composition which comprises a polyolefin (a) bearing hydrolysable silane group(s) containing units, wherein

    - the amount of the hydrolysable silane group(s) containing units is from 0.010 to 0.081 mol/kg polyolefin (a), when measured according to "The amount of hydrolysable silane group(s)" as described below under "Determination methods", and wherein
    - the polymer composition has a hot set elongation exceeding 30%, when measured according to "Hot set elongation test" using a crosslinked cable sample as described under "Determination methods" after crosslinking the sample in water at 90°C for 20 hours;
    as defined in any of the previous claims 1-12.

14. The article according to claim 13, which is a cable comprising a conductor surrounded by at least one layer comprising a polymer composition which comprises a polyolefin (a) bearing hydrolysable silane group(s) containing units, wherein

    - the amount of the hydrolysable silane group(s) containing units is from 0.010 to 0.081 mol/kg polyolefin (a), when measured according to "The amount of hydrolysable silane group(s)" as described below under "Determination methods", and wherein
    - the polymer composition has a hot set elongation exceeding 30%, when measured according to "Hot set elongation test" using a crosslinked cable sample as described under "Determination methods" after crosslinking the sample in water at 90°C for 20 hours;
    as defined in any of the previous claims 1-12;
    preferably a power cable selected from
    - a cable (A) comprising a conductor surrounded by at least an insulating layer comprising a polymer composition which comprises a polyolefin (a) bearing hydrolysable silane group(s) containing units, wherein
    - the amount of the hydrolysable silane group(s) containing units is from 0.010 to 0.081 mol/kg polyolefin (a), when measured according to "The amount of hydrolysable silane group(s)" as described below under "Determination methods", and wherein
    - the polymer composition has a hot set elongation exceeding 30%, when measured according to "Hot set elongation test" using a crosslinked cable sample as described under "Determination methods" after crosslinking the sample in water at 90°C for 20 hours;
    as defined in any of the previous claims 1-12; or
    - a cable (B) comprising a conductor surrounded by an inner semiconductive layer, an insulating layer and an outer semiconductive layer, in that order, wherein at least one layer, preferably at least the insulation layer, comprises a polymer composition which comprises a polyolefin (a) bearing hydrolysable silane group(s) containing units, wherein

- the amount of the hydrolysable silane group(s) containing units is from 0.010 to 0.081 mol/kg polyolefin (a), when measured according to "The amount of hydrolysable silane group(s)" as described below under "Determination methods", and wherein

- the polymer composition has a hot set elongation exceeding 30%, when measured according to "Hot set elongation test" using a crosslinked cable sample as described under "Determination methods" after crosslinking the sample in water at 90°C for 20 hours;

as defined in any of the previous claims 1-12.

15. A process for producing a cable according to claim 14, whereby the process comprises the step of

- applying on a conductor, preferably by (co)extrusion, one or more layers, wherein at least one layer comprises a polymer composition which comprises a polyolefin (a) bearing hydrolysable silane group(s) containing units, wherein

- the amount of the hydrolysable silane group(s) containing units is from 0.010 to 0.081 mol/kg polyolefin (a), when measured according to "The amount of hydrolysable silane group(s)" as described below under "Determination methods", and wherein

- the polymer composition has a hot set elongation exceeding 30%, when measured according to "Hot set elongation test" using a crosslinked cable sample as described under "Determination methods" after crosslinking the sample in water at 90°C for 20 hours;

as defined in any of the previous claims 1-12;

preferably a process for producing :

(i) a cable (A), wherein the process comprises the steps of

- applying on a conductor, preferably by (co)extrusion, at least an insulation layer comprising a polymer composition which comprises a polyolefin (a) bearing hydrolysable silane group(s) containing units, wherein

- the amount of the hydrolysable silane group(s) containing units is from 0.010 to 0.081 mol/kg polyolefin (a), when measured according to "The amount of hydrolysable silane group(s)" as described below under "Determination methods", and wherein

- the polymer composition has a hot set elongation exceeding 30%, when measured according to "Hot set elongation test" using a crosslinked cable sample as described under "Determination methods" after crosslinking the sample in water at 90°C for 20 hours;

as defined in any of the previous claims 1-12; or

(ii) a cable (B), wherein the process comprises the steps of

- applying on a conductor, preferably by (co)extrusion, an inner semiconductive layer comprising a first semiconductive composition, an insulation layer comprising an insulation composition and an outer semiconductive layer comprising a second semiconductive composition, in that order, wherein the composition of at least one layer, preferably at least the insulation composition of the insulation layer comprises the polymer composition which comprises a polyolefin (a) bearing hydrolysable silane group(s) containing units, wherein

- the amount of the hydrolysable silane group(s) containing units is from 0.010 to 0.081 mol/kg polyolefin (a), when measured according to "The amount of hydrolysable silane group(s)" as described below under "Determination methods", and wherein

- the polymer composition has a hot set elongation exceeding 30%, when measured according to "Hot set elongation test" using a crosslinked cable sample as described under "Determination methods" after crosslinking the sample in water at 90°C for 20 hours; as defined in any of the previous claims 1-12.

16. The process according to claim 15 for producing a crosslinked cable, wherein the process comprises a further step of

- crosslinking the obtained at least one layer comprising the polymer composition as defined in any of the previous claims 1-12 in the presence of a silanol condensation catalyst and water, preferably for producing:

(i) a crosslinked cable (A), wherein the process comprises a further step of:

- crosslinking the insulation composition of the obtained insulation layer of the cable (A) in the presence of a silanol condensation catalyst and water, or

(ii) a crosslinked cable (B), wherein the process comprises a further step of:

- crosslinking at least one of the insulation composition of the insulation layer, the first semiconductive composition of the inner semiconductive layer or the second semiconductive composition of the outer semiconductive layer of the obtained cable (B) in the presence of a silanol condensation catalyst and water; preferably crosslinking at least the insulation composition of the insulation layer of the cable (B), wherein said insulation composition comprises the polymer composition as defined in any of the previous claims 1-12.

17. A crosslinked cable obtainable by the process according to claim 16.

18. A method for stabilising mechanical properties during storing of a composition which comprises a silane group(s) bearing polymer, wherein a polyolefin (a) which bears hydrolysable silane group(s) containing units in an amount of from 0.010 to 0.081 mol/kg polyolefin (a), as defined in any of the previous claims 1, 2, 4-9, is used as the silane group(s) bearing polymer.

**Patentansprüche**

1. Polymerzusammensetzung, welche ein Polyolefin (a) umfasst, das hydrolysierbare Silangruppen enthaltende Einheiten trägt, wobei

- die Menge der hydrolysierbare Silangruppen enthaltenden Einheiten 0,010 bis 0,081 mol/kg Polyolefin (a) beträgt, gemessen gemäß "Die Menge an hydrolysierbaren Silangruppen", wie nachstehend unter "Bestimmungsmethoden" beschrieben, und wobei
- die Polymerzusammensetzung eine Hot-Set Dehnung von mehr als 30% aufweist, gemessen gemäß dem "Hot-Setter "Bestimmungsmethoden" beschrieben, nach dem Quervernetzen der Probe in Wasser bei 90°C für 20 Stunden.

2. Polymerzusammensetzung gemäß Anspruch 1, wobei das Polyolefin (a) hydrolysierbare Silangruppen enthaltende Einheiten in einer Menge von 0,020 bis 0,077 mol/kg Polyolefin (a), vorzugsweise 0,027 bis 0,074 mol/kg Polyolefin (a), vorzugsweise 0,033 bis 0,073 mol/kg Polyolefin (a), vorzugsweise von 0,041 bis 0,072 mol/kg Polyolefin (a), aufweist.

3. Polymerzusammensetzung gemäß einem der vorhergehenden Ansprüche, wobei die Polymerzusammensetzung eine Hot-Set Dehnung von weniger als 180%, weiter vorzugsweise von 150% oder weniger und am meisten vorzugsweise von weniger als 130%, aufweist.

4. Polymerzusammensetzung gemäß einem der vorhergehenden Ansprüche, wobei das Polyolefin (a), welches hydrolysierbare Silangruppen enthaltende Einheiten trägt, einen MFR2 von 0,10 bis 10,0 g/10 min, vorzugsweise von 0,30 bis 5,0 g/10 min, vorzugsweise von 0,30 bis 2,0 g/10 min, vorzugsweise von 0,30 bis 1,50 g/10 min, vorzugsweise von 0,30 bis 1,30 g/10 min, vorzugsweise von 0,30 bis 1,20 g/10 min, gemessen gemäß ISO 1133 bei 190°C und bei einer Belastung von 2,16 kg, aufweist,

5. Polymerzusammensetzung gemäß einem der vorhergehenden Ansprüche, wobei die hydrolysierbare Silangruppen enthaltenden Einheiten durch Copolymerisieren eines Olefin-Comonomers mit einem hydrolysierbare Silangruppen enthaltenden Comonomer oder durch Pfropfen einer hydrolysierbare Silangruppen enthaltenden Verbindung, vorzugsweise durch Copolymerisieren eines Olefin-Comonomers mit einem hydrolysierbare Silangruppen enthaltenden Comonomer, in das Polyolefin (a) eingeführt werden.

6. Polymerzusammensetzung gemäß einem der vorhergehenden Ansprüche, wobei das Polyolefin (a), das hydrolysierbare Silangruppen enthaltende Einheiten trägt, ein Propylen-Polymer oder ein Ethylen-Copolymer, vorzugsweise ein Ethylen-Copolymer, weiter vorzugsweise ein Copolymer aus Ethylen und einem hydrolysierbare Silangruppen enthaltenden Comonomer, welches in Gegenwart eines Olefin-Polymerisationskatalysators hergestellt wird, oder ein Copolymer aus Ethylen und einem hydrolysierbare Silangruppen enthaltenden Comonomer, welches in einem Hochdruckverfahren hergestellt wird, darstellt.

7. Polymerzusammensetzung gemäß einem der vorhergehenden Ansprüche, wobei das Polyolefin (a), das hydrolysierbare Silangruppen enthaltende Einheiten trägt, ein Homopolymer niedriger Dichte aus Ethylen (hier als LDPE-Homopolymer bezeichnet), welches hydrolysierbare Silangruppen enthaltende Einheiten trägt oder ein Copolymer niedriger Dichte aus Ethylen (LDPE-Copolymer) mit mindestens einem Comonomer, welches hydrolysierbare Silangruppen enthaltende Einheiten trägt, vorzugsweise ein LDPE-Copolymer aus Ethylen mit mindestens einem Silangruppen enthaltenden Comonomer und optional einem oder mehreren Comonomer(en), die vorzugsweise aus polaren Comonomeren, welche Carboxylgruppen und/oder Estergruppen enthalten, weiter vorzugsweise aus der Gruppe der Acrylate, Methacrylate oder Acetate, ausgewählt werden, darstellt.

8. Polymerzusammensetzung gemäß einem der vorhergehenden Ansprüche, wobei das hydrolysierbare Silangruppen enthaltende Comonomer oder die Verbindung, eine ungesättigte Silanverbindung dargestellt, die durch die Formel

$$R^1SiR^2_qY_{3-q} \qquad (I)$$

dargestellt wird, wobei
$R^1$ eine ethylenisch ungesättigte Kohlenwasserstoff-, Kohlenwasserstoffoxy- oder (Meth)acryloxy-Kohlenwasserstoffgruppe ist,
jedes $R^2$ unabhängig voneinander eine aliphatische gesättigte Kohlenwasserstoffgruppe ist,
Y, welches gleich oder verschieden sein kann, eine hydrolysierbare organische Gruppe ist und
q gleich 0, 1 oder 2 ist.

9. Polyolefinzusammensetzung gemäß einem der vorhergehenden Ansprüche, wobei die brandverzögernde Verbindung eine silikonhaltige Verbindung darstellt, welche eine Struktur gemäß der Formel (III)

$$(R^1)_x[Si(R^2)_y(R^3)_z]m \qquad (III)$$

aufweist, wobei
$R^1$, welches gleich oder verschieden sein kann, wenn mehr als eine solche Gruppe vorliegt, ein monofunktioneller Kohlenwasserstoffrest oder, wenn m = 2, ein bifunktioneller Kohlenwasserstoffrest ist, der 1 bis 100 Kohlenstoffatome umfasst;
$R^2$, welches gleich oder verschieden sein kann, wenn mehr als eine solche Gruppe vorliegt, ein Kohlenwasserstoffoxyrest ist, der 1 bis 100 Kohlenstoffatome umfasst;
$R^3$-$R^4SiR^1_pR^2_q$ ist, wobei
p 0 bis 3, vorzugsweise 0 bis 2, ist,
q 0 bis 3, vorzugsweise 1 bis 3 ist,
mit der Maßgabe, dass p + q gleich 3 ist, und
$R^4$-$(CH_2)_rY_s(CH_2)_t$- ist, worin r und t unabhängig voneinander 1 bis 3 sind, s 0 oder 1 ist und Y eine difunktionelle heteroatomare Gruppe, ausgewählt aus -O-, -S-, -SO-, -SO$_2$-, -NH-, -NR$^1$- oder -PR$^1$-, darstellt, wobei $R^1$ und $R^2$ wie zuvor definiert sind; und
x 0 bis 3 ist, y 1 bis 4 ist, z 0 oder 1 ist, mit der Maßgabe, dass x + y + z = 4; und m = 1 oder 2 ist.

10. Polymerzusammensetzung gemäß einem der vorhergehenden Ansprüche, wobei die Polymerzusammensetzung ferner eine brandverzögernde Verbindung umfasst und, vorzugsweise, die Menge der brandverzögernden Verbindung mindestens 0,001 mol/kg Polymerzusammensetzung, vorzugsweise 0,001 bis 0,2 mol/kg Polymerzusammensetzung, weiter vorzugsweise von 0,005 bis 0,15 mol/kg Polymerzusammensetzung, beträgt.

11. Polymerzusammensetzung gemäß einem der vorhergehenden Ansprüche, wobei die Polymerzusammensetzung ferner einen Silanolkondensationskatalysator umfasst, der vorzugsweise aus Carboxylaten von Metallen wie Zinn, Zink, Eisen, Blei und Kobalt; aus einer Titan-Verbindung, die eine Gruppe trägt, welche zu einer Brönsted-Säure hydrolysierbar ist; aus organischen Basen, aus anorganischen Säuren und aus organischen Säuren, weiter vorzugsweise aus Carboxylaten von Metallen, wie Zink, Zink, Eisen, Blei und Kobalt; aus einer Titan-Verbindung, die eine Gruppe trägt, welche zu einer Brönsted-Säure hydrolysierbar ist wie oben beschrieben oder aus organischen Säuren ausgewählt wird. Der Silanolkondensationskatalysator wird vorzugsweise ausgewählt aus DBTL, DOTL, insbesondere DOTL; aus einer Titan-Verbindung, die eine Gruppe trägt, welche zu einer Brönsted-Säure hydrolysierbar ist wie oben beschrieben oder einer aromatischen organischen Sulfonsäure, die vorzugsweise eine organische Sulfonsäure darstellt, die das Strukturelement Ar(SO$_3$H)$_x$ (II)

umfasst, wobei Ar eine Arylgruppe ist, die substituiert oder unsubstituiert sein kann, und falls substituiert, dann vorzugsweise mit mindestens einer Kohlenwasserstoffgruppe mit bis zu 50 Kohlenstoffatomen und x mindestens 1 ist; oder einem Vorläufer der Sulfonsäure der Formel (II) einschließlich einem Säureanhydrid davon oder einer Sulfonsäure der Formel (II), die mit einer hydrolysierbaren Schutzgruppe versehen worden ist, z. B. einer Acetylgruppe, die durch Hydrolyse entfernbar ist.

12. Polymerzusammensetzung gemäß einem der vorhergehenden Ansprüche, wobei der Silanolkondensationskatalysator in einer Menge von 0,00001 bis 0,1 mol/kg Polymerzusammensetzung, vorzugsweise von 0,0001 bis 0,01 mol/kg Polymerzusammensetzung, weiter vorzugsweise von 0,0005 bis 0,005 mol/kg Polymerzusammensetzung, vorliegt.

13. Gegenstand, umfassend eine Polymerzusammensetzung, welche ein Polyolefin (a) umfasst, das hydrolysierbare Silangruppen enthaltende Einheiten trägt, wobei

- die Menge der hydrolysierbare Silangruppen enthaltenden Einheiten 0,010 bis 0,081 mol/kg Polyolefin (a) beträgt, gemessen gemäß "Die Menge an hydrolysierbaren Silangruppen", wie nachstehend unter "Bestimmungsmethoden" beschrieben, und wobei
- die Polymerzusammensetzung eine Hot-Set Dehnung von mehr als 30% aufweist, gemessen gemäß dem "Hot-Set Dehnungstest", unter Verwendung einer quervernetzten Kabelprobe, wie unter "Bestimmungsmethoden" beschrieben, nach dem Quervernetzen der Probe in Wasser bei 90°C für 20 Stunden; wie in einem der vorhergehenden Ansprüche 1-12 definiert.

14. Gegenstand gemäß Anspruch 13, welcher ein Kabel darstellt, das einen Leiter umfasst, der von mindestens einer Schicht umgeben ist, die eine Polymerzusammensetzung umfasst, welche ein Polyolefin (a) umfasst, das hydrolysierbare Silangruppen enthaltende Einheiten trägt, wobei

- die Menge der hydrolysierbare Silangruppen enthaltenden Einheiten 0,010 bis 0,081 mol/kg Polyolefin (a) beträgt, gemessen gemäß "Die Menge an hydrolysierbaren Silangruppen", wie nachstehend unter "Bestimmungsmethoden" beschrieben, und wobei
- die Polymerzusammensetzung eine Hot-Set Dehnung von mehr als 30% aufweist, gemessen gemäß dem "Hot-Set Dehnungstest", unter Verwendung einer quervernetzten Kabelprobe, wie unter "Bestimmungsmethoden" beschrieben, nach dem Quervernetzen der Probe in Wasser bei 90°C für 20 Stunden; wie in einem der vorhergehenden Ansprüche 1-12 definiert;
vorzugsweise wird ein Stromkabel ausgewählt aus
- einem Kabel (A), umfassend einen Leiter, der von mindestens einer Isolierschicht umgeben ist, die eine Polymerzusammensetzung umfasst, welche ein Polyolefin (a) umfasst, das hydrolysierbare Silangruppen enthaltende Einheiten trägt, wobei
- die Menge der hydrolysierbare Silangruppen enthaltenden Einheiten 0,010 bis 0,081 mol/kg Polyolefin (a) beträgt, gemessen gemäß "Die Menge an hydrolysierbaren Silangruppen", wie nachstehend unter "Bestimmungsmethoden" beschrieben, und wobei
- die Polymerzusammensetzung eine Hot-Set Dehnung von mehr als 30% aufweist, gemessen gemäß dem "Hot-Set Dehnungstest", unter Verwendung einer quervernetzten Kabelprobe, wie unter "Bestimmungsmethoden" beschrieben, nach dem Quervernetzen der Probe in Wasser bei 90°C für 20 Stunden; wie in einem der vorhergehenden Ansprüche 1-12 definiert; oder
- einem Kabel (B), umfassend einen Leiter, der von einer inneren Halbleiterschicht, einer Isolierschicht und einer äußeren Halbleiterschicht, in dieser Reihenfolge, umgeben ist, wobei mindestens eine Schicht, vorzugsweise mindestens die Isolierschicht, eine Polymerzusammensetzung umfasst, welche ein Polyolefin (a) umfasst, das hydrolysierbare Silangruppen enthaltende Einheiten trägt, wobei
- die Menge der hydrolysierbare Silangruppen enthaltenden Einheiten 0,010 bis 0,081 mol/kg Polyolefin (a) beträgt, gemessen gemäß "Die Menge an hydrolysierbaren Silangruppen", wie nachstehend unter "Bestimmungsmethoden" beschrieben, und wobei
- die Polymerzusammensetzung eine Hot-Set Dehnung von mehr als 30% aufweist, gemessen gemäß dem "Hot-Set Dehnungstest", unter Verwendung einer quervernetzten Kabelprobe, wie unter "Bestimmungsmethoden" beschrieben, nach dem Quervernetzen der Probe in Wasser bei 90°C für 20 Stunden; wie in einem der vorhergehenden Ansprüche 1-12 definiert.

15. Verfahren zur Herstellung eines Kabels gemäß Anspruch 14, wobei das Verfahren den Schritt des

- Aufbringens einer oder mehrerer Schichten auf einem Leiter umfasst, vorzugsweise durch (Co)extrusion, wobei mindestens eine Schicht eine Polymerzusammensetzung umfasst, welche ein Polyolefin (a) umfasst, das hydrolysierbare Silangruppen enthaltende Einheiten trägt, wobei

- die Menge der hydrolysierbare Silangruppen enthaltenden Einheiten 0,010 bis 0,081 mol/kg Polyolefin (a) beträgt, gemessen gemäß "Die Menge an hydrolysierbaren Silangruppen", wie nachstehend unter "Bestimmungsmethoden" beschrieben, und wobei

- die Polymerzusammensetzung eine Hot-Set Dehnung von mehr als 30% aufweist, gemessen gemäß dem "Hot-Set Dehnungstest", unter Verwendung einer quervernetzten Kabelprobe, wie unter "Bestimmungsmethoden" beschrieben, nach dem Quervernetzen der Probe in Wasser bei 90°C für 20 Stunden; wie in einem der vorhergehenden Ansprüche 1-12 definiert;

vorzugsweise ein Verfahren zur Herstellung von:

(i) einem Kabel (A), wobei das Verfahren die Schritte des

- Aufbringens mindestens einer Isolierschicht auf einem Leiter umfasst, vorzugsweise durch (Co)extrusion, wobei die mindestens eine Isolierschicht eine Polymerzusammensetzung umfasst, welche ein Polyolefin (a) umfasst, das hydrolysierbare Silangruppen enthaltende Einheiten trägt, wobei

- die Menge der hydrolysierbare Silangruppen enthaltenden Einheiten 0,010 bis 0,081 mol/kg Polyolefin (a) beträgt, gemessen gemäß "Die Menge an hydrolysierbaren Silangruppen", wie nachstehend unter "Bestimmungsmethoden" beschrieben, und wobei

- die Polymerzusammensetzung eine Hot-Set Dehnung von mehr als 30% aufweist, gemessen gemäß dem "Hot-Set Dehnungstest", unter Verwendung einer quervernetzten Kabelprobe, wie unter "Bestimmungsmethoden" beschrieben, nach dem Quervernetzen der Probe in Wasser bei 90°C für 20 Stunden; wie in einem der vorhergehenden Ansprüche 1-12 definiert; oder

(ii) einem Kabel (B), wobei das Verfahren die Schritte des

- Aufbringens einer inneren Halbleiterschicht, umfassend eine erste Halbleiterzusammensetzung, einer Isolierschicht, umfassend eine Isolierzusammensetzung und einer äußeren Halbleiterschicht, umfassend eine zweite Halbleiterzusammensetzung, in dieser Reihenfolge, auf einen Leiter umfasst, vorzugsweise durch (Co)extrusion, wobei die Zusammensetzung mindestens einer Schicht, vorzugsweise mindestens die Isolierzusammensetzung der Isolierschicht, die Polymerzusammensetzung umfasst, welche ein Polyolefin (a) umfasst, das hydrolysierbare Silangruppen enthaltende Einheiten trägt, wobei

- die Menge der hydrolysierbare Silangruppen enthaltenden Einheiten 0,010 bis 0,081 mol/kg Polyolefin (a) beträgt, gemessen gemäß "Die Menge an hydrolysierbaren Silangruppen", wie nachstehend unter "Bestimmungsmethoden" beschrieben, und wobei

- die Polymerzusammensetzung eine Hot-Set Dehnung von mehr als 30% aufweist, gemessen gemäß dem "Hot-Set Dehnungstest", unter Verwendung einer quervernetzten Kabelprobe, wie unter "Bestimmungsmethoden" beschrieben, nach dem Quervernetzen der Probe in Wasser bei 90°C für 20 Stunden; wie in einem der vorhergehenden Ansprüche 1-12 definiert.

**16.** Verfahren gemäß Anspruch 15 zur Herstellung eines quervernetzten Kabels, wobei das Verfahren einen weiteren Schritt des

- Quervernetzens der erhaltenen mindestens einen Schicht, umfassend die Polymerzusammensetzung, wie in einem der vorhergehenden Ansprüche 1-12 definiert, in Gegenwart eines Silanolkondensationskatalysators und Wasser, umfasst, vorzugsweise zur Herstellung

(i) eines quervernetzten Kabels (A), wobei das Verfahren einen weiteren Schritt des

- Quervernetzens der Isolierzusammensetzung der erhaltenen Isolierschicht des Kabels (A) in Gegenwart eines Silanolkondensationskatalysators und Wasser umfasst, oder

(ii) eines quervernetzten Kabels (B), wobei das Verfahren einen weiteren Schritt des

- Quervernetzens mindestens einer der Isolierzusammensetzung der Isolierschicht, der ersten Halbleiterzusammensetzung der inneren Halbleiterschicht oder der zweiten Halbleiterzusammensetzung der äußeren Halbleiterschicht des erhaltenen Kabels (B), in Gegenwart eines Silanolkondensationskatalysators und Wasser, umfasst, vorzugsweise des Quervernetzens von mindestens der Isolierzusammensetzung der Isolierschicht des Kabels (B), wobei die Isolierzusammensetzung die Polymerzusammensetzung, wie in einem der vorhergehenden Ansprüche 1-12 definiert, umfasst.

17. Quervernetztes Kabel, erhältlich durch das Verfahren gemäß Anspruch 16.

18. Verfahren zur Stabilisierung der mechanischen Eigenschaften während der Lagerung einer Zusammensetzung, welche ein Silangruppen tragendes Polymer umfasst, wobei ein Polyolefin (a), das hydrolysierbare Silangruppen enthaltende Einheiten in einer Menge von 0,010 bis 0,081 mol/kg Polyolefin trägt, wie in einem der vorhergehenden Ansprüche 1, 2, 4-9 definiert, als das Silangruppen tragende Polymer verwendet wird.

## Revendications

1. Composition polymère qui comprend une polyoléfine (a) qui porte des unités contenant un ou des groupements silanes hydrolysables, dans laquelle

   - la quantité d'unités contenant un ou des groupements silanes hydrolysables va de 0,010 à 0,081 mol/kg de polyoléfine (a) quand mesurée comme décrit ci-dessous à la rubrique « Quantité de groupement(s) silane(s) hydrolysable(s) » de la section « Méthodes de détermination » et dans laquelle
   - la valeur de l'allongement à chaud de la composition polymère dépasse 30 % quand mesurée comme décrit ci-dessous à la rubrique « Essai d'allongement à chaud » de la section « Méthodes de détermination » après réticulation de l'échantillon dans l'eau à 90 °C pendant 20 heures.

2. Composition polymère selon la revendication 1, dans laquelle la polyoléfine (a) a des unités contenant un ou des groupements silanes hydrolysables en une quantité qui va de 0,020 à 0,077 mol/kg de polyoléfine (a), préférablement de 0,027 à 0,074 mol/kg de polyoléfine (a), préférablement de 0,033 à 0,073 mol/kg de polyoléfine (a), préférablement de 0,041 à 0,072 mol/kg de polyoléfine (a).

3. Composition polymère selon l'une quelconque des revendications précédentes, ladite valeur de l'allongement à chaud de la composition polymère étant inférieure à 180 %, plus préférablement de 150 % ou moins et le plus préférablement inférieure à 130 %.

4. Composition polymère selon l'une quelconque des revendications précédentes, dans laquelle l'indice de fluidité $MFR_2$ de la polyoléfine (a) qui porte des unités contenant un ou des groupements silanes hydrolysables va de 0,10 à 10,0 g/10 min, préférablement de 0,30 à 5,0 g/10 min, préférablement de 0,30 à 2,0 g/10 min, préférablement de 0,30 à 1,50 g/10 min, préférablement de 0,30 à 1,30 g/10 min et préférablement de 0,30 à 1,20 g/10 min quand mesuré conformément à la norme ISO 1133 à 190 °C et sous une charge de 2,16 kg.

5. Composition polymère selon l'une quelconque des revendications précédentes, dans laquelle les unités contenant un ou des groupements silanes hydrolysables sont introduites dans la polyoléfine (a) par copolymérisation d'un comonomère oléfinique et d'un comonomère contenant un groupement silane hydrolysable ou par greffe d'un composé contenant un groupement silane hydrolysable à un polymère polyoléfinique, préférablement par copolymérisation d'un comonomère oléfinique et d'un comonomère contenant un groupement silane hydrolysable.

6. Composition polymère selon l'une quelconque des revendications précédentes, dans laquelle la polyoléfine (a) qui porte des unités contenant un ou des groupements silanes hydrolysables est un polymère du propylène ou un copolymère de l'éthylène, préférablement un copolymère de l'éthylène, plus préférablement un copolymère de l'éthylène et d'un comonomère contenant un ou des groupements silane hydrolysables qui est produit en la présence d'un catalyseur de polymérisation des oléfines ou un copolymère de l'éthylène et d'un comonomère contenant un ou des groupements silanes hydrolysables qui est produit par un processus à haute pression.

7. Composition polymère selon l'une quelconque des revendications précédentes, dans laquelle la polyoléfine (a) qui porte des unités contenant un ou des groupements silanes hydrolysables est un homopolymère basse densité de l'éthylène (désigné ici sous le nom d'homopolymère LDPE) portant des unités contenant un ou des groupements silanes hydrolysables ou un copolymère basse densité de l'éthylène (copolymère LDPE) et d'au moins un comonomère et portant des unités contenant un ou des groupements silanes hydrolysables, préférablement un copolymère LDPE de l'éthylène, d'au moins un comonomère contenant des groupements silanes et, en option, d'un ou de plusieurs autres comonomères préférablement sélectionnés parmi un ou des comonomères polaires contenant un ou des groupements carboxyles et/ou esters et plus préférablement sélectionnés dans le groupe consistant en un ou des acrylates, méthacrylates ou acétates.

8. Composition polymère selon l'une quelconque des revendications précédentes, dans laquelle le comonomère ou le composé contenant un ou des groupements silanes hydrolysables est un composé silane insaturé représenté par la formule

$$R^1SiR^2_qY_{3-q} \qquad (I)$$

dans laquelle

$R^1$ représente un groupement hydrocarbyle, hydrocarbyloxy ou (méth)acryloxyhydrocarbyle à insaturation éthylénique,

chaque $R^2$ représente indépendamment un groupement hydrocarbyle aliphatique saturé,

chacun des radicaux Y, qui peuvent être identiques ou différents, représente un groupement organique hydrolysable et

q représente 0, 1 ou 2.

9. Composition polyoléfinique selon l'une quelconque des revendications précédentes, dans laquelle le composé retardant le grillage est un composé contenant une silicone de structure conforme à la formule (III)

$$(R^1)_x[Si(R^2)_y(R^3)_z]_m \qquad (III)$$

dans laquelle

chacun des radicaux $R^1$, qui peuvent être identiques ou différents si plusieurs groupements de ce type sont présents, est un résidu hydrocarbyle monofonctionnel ou, si m = 2, un résidu hydrocarbyle bifonctionnel comprenant de 1 à 100 atomes de carbone ;

chacun des radicaux $R^2$, qui peuvent être identiques ou différents si plusieurs groupements de ce type sont présents, est un résidu hydrocarbyloxy comprenant de 1 à 100 atomes de carbone ;

$R^3$ représente $-R^4SiR^1_pR^2_q$, où

p représente 0 à 3, préférablement 0 à 2,

q représente 0 à 3, préférablement 1 à 3,

à condition que p + q = 3 et

$R^4$ représente $-(CH_2)_rY_s(CH_2)_t-$, où r et t représentent indépendamment 1 à 3, s représente 0 ou 1 et Y est un groupement hétéroatomique bifonctionnel sélectionné parmi -O-, -S-, -SO-, -SO_2-, -NH-, -NR^1- ou -PR^1-, où $R^1$ et $R^2$ sont comme définis précédemment ; et

x représente 0 à 3, y représente 1 à 4 et z représente 0 ou 1, à condition que x+y+z=4;

et m = 1 ou 2.

10. Composition polymère selon l'une quelconque des revendications précédentes, la composition polymère comprenant également un composé retardant le grillage et la quantité du composé retardant le grillage étant d'au moins 0,001 mol/kg de composition polymère, préférablement de 0,001 à 0,2 mol/kg de composition polymère et plus préférablement de 0,005 à 0,15 mol/kg de composition polymère.

11. Composition polymère selon l'une quelconque des revendications précédentes, la composition polymère comprenant également un catalyseur de la condensation des silanols qui est préférablement sélectionné parmi des carboxylates de métaux comme l'étain, le zinc, le fer, le plomb et le cobalt ; un composé à base de titane portant un groupement hydrolysable en un acide de Brônsted, des bases organiques, des acides inorganiques et des acides organiques ; plus préférablement parmi des carboxylates de métaux comme l'étain, le zinc, le fer, le plomb et le cobalt, un composé à base de titane portant un groupement hydrolysable en un acide de Brönsted comme défini ci-dessus et des acides organiques. Le catalyseur de la condensation des silanols est plus préférablement sélectionné parmi les suivants : DBTL, DOTL, et en particulier DOTL ; composé à base de titane portant un groupement hydrolysable en un acide de Brönsted comme défini ci-dessus ; ou acide sulfonique organique aromatique qui est préférablement un acide sulfonique organique comprenant l'élément structural :

$$Ar(SO_3H)_x \qquad (II)$$

où Ar représente un groupement aryle qui peut être substitué ou non substitué et, si substitué, l'est préférablement par au moins un groupement hydrocarbyle comportant jusqu'à 50 atomes de carbone et x est au moins égal à 1 ; ou un précurseur de l'acide sulfonique de formule (II), y compris un anhydride acide de celui-ci ou un acide sulfonique de formule (II) doté d'un ou de plusieurs groupements protecteurs hydrolysables, p. ex. d'un groupement acétyle clivable par hydrolyse.

**12.** Composition polymère selon l'une quelconque des revendications précédentes, dans laquelle le catalyseur de la condensation des silanols est présent en une quantité qui va de 0,00001 à 0,1 mol/kg de la composition polymère, préférablement de 0,0001 à 0,01 mol/kg de la composition polymère et plus préférablement de 0,0005 à 0,005 mol/kg de la composition polymère.

**13.** Article comprenant une composition polymère qui comprend une polyoléfine (a) qui porte des unités contenant un ou des groupements silanes hydrolysables, dans lequel

- la quantité d'unités qui contiennent un ou des groupements silanes hydrolysables va de 0,010 à 0,081 mol/kg de polyoléfine (a) quand mesurée comme décrit ci-dessous à la rubrique « Quantité de groupement(s) silane(s) hydrolysable(s) » de la section « Méthodes de détermination » et dans lequel
- la valeur de l'allongement à chaud de la composition polymère dépasse 30 % quand mesurée comme décrit ci-dessous à la rubrique « Essai d'allongement à chaud » de la section « Méthodes de détermination » après réticulation de l'échantillon dans l'eau à 90 °C pendant 20 heures, comme défini à l'une quelconque des revendications 1-12 précédentes.

**14.** Article selon la revendication 13, qui est un câble comprenant un conducteur entouré par au moins une couche comprenant une composition polymère qui comprend une polyoléfine (a) qui porte des unités contenant un ou des groupements silanes hydrolysables, dans lequel

- la quantité d'unités qui contiennent un ou des groupements silanes hydrolysables va de 0,010 à 0,081 mol/kg de polyoléfine (a) quand mesurée comme décrit ci-dessous à la rubrique « Quantité de groupement(s) silane(s) hydrolysable(s) » de la section « Méthodes de détermination » et dans lequel
- la valeur de l'allongement à chaud de la composition polymère dépasse 30 % quand mesurée comme décrit ci-dessous à la rubrique « Essai d'allongement à chaud » de la section « Méthodes de détermination » après réticulation de l'échantillon dans l'eau à 90 °C pendant 20 heures, comme défini à l'une quelconque des revendications 1-12 précédentes ;
préférablement un câble d'alimentation électrique sélectionné entre
- un câble (A) comprenant un conducteur entouré par au moins une couche d'isolation comprenant une composition polymère qui comprend une polyoléfine (a) qui porte des unités contenant un ou des groupements silanes hydrolysables, dans lequel
- la quantité d'unités qui contiennent un ou des groupements silanes hydrolysables va de 0,010 à 0,081 mol/kg de polyoléfine (a) quand mesurée comme décrit ci-dessous à la rubrique « Quantité de groupement(s) silane(s) hydrolysable(s) » de la section « Méthodes de détermination » et dans lequel
- la valeur de l'allongement à chaud de la composition polymère dépasse 30 % quand mesurée comme décrit ci-dessous à la rubrique « Essai d'allongement à chaud » de la section « Méthodes de détermination » après réticulation de l'échantillon dans l'eau à 90 °C pendant 20 heures, comme défini à l'une quelconque des revendications 1-12 précédentes ; ou
- un câble (B) comprenant un conducteur entouré, dans l'ordre, par une couche semi-conductrice interne, une couche d'isolation et une couche semi-conductrice externe, au moins une couche, et préférablement au moins la couche d'isolation, comprenant une composition polymère qui comprend une polyoléfine (a) qui porte des unités contenant un ou des groupements silanes hydrolysables, dans lequel
- la quantité d'unités qui contiennent un ou des groupements silanes hydrolysables va de 0,010 à 0,081 mol/kg de polyoléfine (a) quand mesurée comme décrit ci-dessous à la rubrique « Quantité de groupement(s) silane(s) hydrolysable(s) » de la section « Méthodes de détermination » et dans lequel
- la valeur de l'allongement à chaud de la composition polymère dépasse 30 % quand mesurée comme décrit ci-dessous à la rubrique « Essai d'allongement à chaud » de la section « Méthodes de détermination » après réticulation de l'échantillon dans l'eau à 90 °C pendant 20 heures, comme défini à l'une quelconque des revendications 1-12 précédentes.

**15.** Procédé de production d'un câble selon la revendication 14, ledit procédé comprenant l'étape

- d'application sur un conducteur, préférablement par (co)extrusion, d'une ou de plusieurs couches, au moins une des couches comprenant une composition polymère qui comprend une polyoléfine (a) qui porte des unités contenant un ou des groupements silanes hydrolysables, dans lequel

- la quantité d'unités qui contiennent un ou des groupements silanes hydrolysables va de 0,010 à 0,081 mol/kg de polyoléfine (a) quand mesurée comme décrit ci-dessous à la rubrique « Quantité de groupement(s) silane(s) hydrolysable(s) » de la section « Méthodes de détermination » et dans lequel

- la valeur de l'allongement à chaud de la composition polymère dépasse 30 % quand mesurée comme décrit ci-dessous à la rubrique « Essai d'allongement à chaud » de la section « Méthodes de détermination » après réticulation de l'échantillon dans l'eau à 90 °C pendant 20 heures, comme défini à l'une quelconque des revendications 1-12 précédentes ;

préférablement un procédé pour produire :

(i) un câble (A), ledit procédé comprenant les étapes

- d'application sur un conducteur, préférablement par (co)extrusion, d'au moins une couche d'isolation comprenant une composition polymère qui comprend une polyoléfine (a) qui porte des unités contenant un ou des groupements silanes hydrolysables, dans lequel

- la quantité d'unités qui contiennent un ou des groupements silanes hydrolysables va de 0,010 à 0,081 mol/kg de polyoléfine (a) quand mesurée comme décrit ci-dessous à la rubrique « Quantité de groupement(s) silane(s) hydrolysable(s) » de la section « Méthodes de détermination » et dans lequel

- la valeur de l'allongement à chaud de la composition polymère dépasse 30 % quand mesurée comme décrit ci-dessous à la rubrique « Essai d'allongement à chaud » de la section « Méthodes de détermination » après réticulation de l'échantillon dans l'eau à 90 °C pendant 20 heures, comme défini à l'une quelconque des revendications 1-12 précédentes ; ou

(ii) un câble (B), ledit procédé comprenant les étapes

- d'application sur un conducteur, préférablement par (co)extrusion et dans cet ordre, d'une couche semi-conductrice interne comprenant une première composition semi-conductrice, d'une couche d'isolation comprenant une composition d'isolation et d'une couche semi-conductrice externe comprenant une seconde composition semi-conductrice, la composition d'au moins une des couches, et préférablement au moins la composition d'isolation de la couche d'isolation, comprenant une polyoléfine (a) qui porte des unités contenant un ou des groupements silanes hydrolysables, dans lequel

- la quantité d'unités qui contiennent un ou des groupements silanes hydrolysables va de 0,010 à 0,081 mol/kg de polyoléfine (a) quand mesurée comme décrit ci-dessous à la rubrique « Quantité de groupement(s) silane(s) hydrolysable(s) » de la section « Méthodes de détermination » et dans lequel

- la valeur de l'allongement à chaud de la composition polymère dépasse 30 % quand mesurée comme décrit ci-dessous à la rubrique « Essai d'allongement à chaud » de la section « Méthodes de détermination » après réticulation de l'échantillon dans l'eau à 90 °C pendant 20 heures ;

comme défini à l'une quelconque des revendications 1-12 précédentes.

16. Procédé selon la revendication 15 pour la production d'un câble réticulé, ledit procédé comprenant une étape supplémentaire

- de réticulation de la au moins une couche obtenue comprenant la composition polymère selon l'une quelconque des revendications 1-12 précédentes en la présence d'un catalyseur de la condensation des silanols et d'eau, préférablement pour la production :

(i) d'un câble réticulé (A), ledit procédé comprenant une étape supplémentaire :

- de réticulation de la composition d'isolation de la couche d'isolation du câble (A) obtenue en la présence d'un catalyseur de la condensation des silanols et d'eau, ou

(ii) d'un câble réticulé (B), ledit procédé comprenant une étape supplémentaire :

- de réticulation d'au moins une parmi la composition d'isolation de la couche d'isolation, la première composition semi-conductrice de la couche semi-conductrice interne ou la seconde composition semi-conductrice de la couche semi-conductrice externe du câble (B) obtenu, en la présence d'un catalyseur de la condensation des silanols et d'eau ; et préférablement de réticulation d'au moins la composition d'isolation de la couche d'isolation du câble (B), la dite composition d'isolation comprenant la composition polymère selon l'une quelconque des revendications 1-12 précédentes.

17. Câble réticulé pouvant être obtenu par le procédé selon la revendication 16.

18. Méthode permettant de stabiliser au stockage les propriétés mécaniques d'une composition qui comprend un polymère qui porte un ou des groupements silanes, dans laquelle une polyoléfine (a) qui porte des unités contenant un ou des groupements silanes hydrolysables en une quantité allant de 0,010 à 0,081 mol/kg de polyoléfine (a) selon l'une quelconque des revendications 1, 2, 4-9 précédentes, est utilisée comme polymère qui porte un ou des groupements silanes.

Fig 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4413066 A
- US 4297310 A
- US 4351876 A
- US 4397981 A
- US 4446283 A
- US 4456704 A
- EP 193317 A, Borealis
- EP 1528574 A

- EP 1824926 A
- WO 2009059670 A, Dow
- EP 736065 A
- EP 1309631 A
- EP 1309632 A
- EP 1254923 A
- WO 2005003199 A1
- EP 517868 A


**Non-patent literature cited in the description**

- Encyclopedia of Polymer Science and Engineering. 1986, vol. 6, 383-410
- Polyethylene: High-pressure. **R.KLIMESCH ; D.LITTMANN ; F.-O. MÄHLING.** Encyclopedia of Materials: Science and Technology. Elsevier Science Ltd, 2001, 7181-7184

- **HASLAM J ; WILLIS HA ; SQUIRREL DC.** Identification and analysis of plastics. London Iliffe books, 1972
- *FTIR instrument was a Perkin Elmer,* 2000